# EUROPEAN PATENT APPLICATION

(11) **EP 4 422 086 A1**
(43) Date of publication of application: **28.08.2024**
(21) Application number: 22900304.1
(22) Date of filing: 21.11.2022
(51) Int. Cl.: H04B 7/06

(54) **BEAM CONFIGURATION METHOD, APPARATUS AND SYSTEM**

(30) Priority: 02.12.2021 CN 202111467660
(71) Applicant: Huawei Technologies Co., Ltd., Shenzhen, Guangdong 518129 (CN)
(72) Inventor: LI, Zhongfeng, Shenzhen, Guangdong 518129 (CN); ZHANG, Zhang, Shenzhen, Guangdong 518129 (CN); FENG, Qi, Shenzhen, Guangdong 518129 (CN)
(74) Representative: Pfenning, Meinig & Partner mbB
(86) International application number: PCT/CN2022/133144
(87) International publication number: WO 2023/098499

(57) **Abstract**

Embodiments of the application provide a beam configuration method, an apparatus, and a system. The method is applied to a communication system. The communication system includes a first node, a second node, and a third node. A coordinating node is any one of the first node, the second node, and the third node. The method includes: The coordinating node obtains first information, where the first information includes information about a candidate beam for the first node and information about a candidate beam for the second node. The coordinating node determines beam information of the first node and beam information of the second node based on the first information, where the beam information of the first node indicates a transmit beam for the first node, and the beam information of the second node indicates a receive beam for the second node. The technical solutions can reduce a latency and energy consumption in a beam sweeping process.

## Description

The application claims priority to Chinese Patent Application No. 202111467660.7, filed with the China National Intellectual Property Administration on December 02, 2021 and entitled "BEAM CONFIGURATION METHOD, APPARATUS, AND SYSTEM", which is incorporated herein by reference in its entirety.

### TECHNICAL FIELD

Embodiments of the application relate to the communication field, and more specifically, to a beam configuration method, an apparatus, and a system.

### BACKGROUND

A path loss (path loss) exists in a process of propagating radio signals in space. This reduces a signal coverage area. To implement better coverage, a beamforming technology is introduced. To be specific, a weighting coefficient of each array element in an antenna array is adjusted to generate a directional beam. The beam is directional and can effectively resist a path loss.

Synchronization is performed before two devices communicate with each other by using a beam. Each of the two devices needs to perform periodic beam sweeping, so that another device discovers the device or establishes a connection to the device. In each sweeping periodicity, each beam in a full beam range needs to be used to separately send or receive a synchronization signal.

In this manner, the device needs to perform sweeping within the full beam range. Consequently, a latency is long, energy consumption is high, and a fast access requirement cannot be met.

### SUMMARY

Embodiments of the application provide a beam configuration method, an apparatus, and a system, to reduce a latency and energy consumption in a beam sweeping process.

According to a first aspect, a beam configuration method is provided. The method is applied to a communication system. The communication system includes a first node, a second node, and a third node. A coordinating node is any one of the first node, the second node, and the third node. The method includes: The coordinating node obtains first information, where the first information includes information about a candidate beam for the first node and information about a candidate beam for the second node. The coordinating node determines beam information of the first node and beam information of the second node based on the first information, where the beam information of the first node indicates a transmit beam for the first node, and the beam information of the second node indicates a receive beam for the second node.

In the technical solutions provided in the application, the coordinating node obtains the information about the candidate beams for the first node and the second node, to assist in determining the beam information for communication of the first node and the second node. The first node and the second node perform beam sweeping and alignment based on the beam information configured by the coordinating node. This reduces a latency and energy consumption.

With reference to the first aspect, in a possible implementation, that the coordinating node obtains first information includes: The coordinating node obtains the first information in at least one of the following manners: The coordinating node receives the information that is about the candidate beam for the first node and that is reported by the first node; or the coordinating node receives the information that is about the candidate beam for the second node and that is reported by the second node.

If the coordinating node is the third node, the coordinating node receives the information about the candidate beams reported by the first node and the second node. If the coordinating node is the first node, the coordinating node receives the information about the candidate beam for the second node. If the coordinating node is the second node, the coordinating node receives the information about the candidate beam for the first node.

The first node or the second node or both report the information about the respective candidate beams, so that the coordinating node can receive the information and determine the beam information of the two nodes. The reporting may be periodic and active reporting, so that overheads and a latency of sending, by the coordinating node, information to indicate the reporting are reduced, and communication efficiency of the two nodes is improved.

With reference to the first aspect, in a possible implementation, before the coordinating node obtains the first information, the method further includes: The coordinating node performs at least one of the following operations: The coordinating node sends first request information to the first node, where the first request information indicates the first node to report the information about the candidate beam for the first node; or the coordinating node sends second request information to the second node, where the second request information indicates the second node to report the information about the candidate beam for the second node.

The coordinating node sends the request information to the first node and/or the second node to request for the information about the candidate beams for the first node and/or the second node, so that related information can be obtained in a timely manner.

With reference to the first aspect, in a possible implementation, the information about the candidate beam includes information related to at least one of an angle range and a geographical range.

That the information about the candidate beams includes information related to at least one of an angle range and a geographical location range means that the first node and/or the second node may report all beam information, or may report only a part of the beam information. The part of the beam information may be only the part of the beam information that the first node or the second node or both determine to report, or may be only the part of the beam information that the coordinating node requests the first node and/or the second node to report, so that reporting overheads can be reduced, the coordinating node can determine the beam information of the first node and the second node in a smaller range, and coordination overheads of the coordinating node are reduced.

With reference to the first aspect, in a possible implementation, the information about the candidate beam for the first node includes at least one of an index of the candidate beam for the first node, an angle corresponding to the index of the candidate beam for the first node, and a quantity of candidate beams for the first node. The information about the candidate beam for the second node includes at least one of an index of the candidate beam for the second node, an angle corresponding to the index of the candidate beam for the second node, and a quantity of candidate beams for the second node.

The information that is about the candidate beam and that is obtained by the coordinating node is the index of the candidate beam and/or the angle corresponding to the index of the candidate beam, or the information about the candidate beam is the quantity of candidate beams. The coordinating node can flexibly configure corresponding beam information for the first node and the second node based on respective different information about the candidate beams.

With reference to the first aspect, in a possible implementation, the quantity of candidate beams is determined based on location information of the first node and location information of the second node.

The first node or the second node may determine a direction of a third link based on the location information of the first node and the second node, to select several beams corresponding to the direction as candidate beams, so that the quantity of candidate beams may be determined. Determining the quantity of candidate beams based on the location information may avoid selecting a beam in an excessively large range. This reduces overheads of beam sweeping.

With reference to the first aspect, in a possible implementation, the coordinating node performs at least one of the following operations: sending the location information of the second node to the first node; or sending the location information of the first node to the second node.

The coordinating node sends location information of one node to a peer side of a link or a target node, so that two nodes can determine candidate beams for the two nodes based on location information of the two nodes and location information of a peer-side node, so that the coordinating node further configures a beam sequence.

With reference to the first aspect, in a possible implementation, the beam information of the first node includes a transmit beam sequence of the first node, and the beam information of the second node includes a receive beam sequence of the second node.

The coordinating node can determine the transmit beam sequence of the first node and the receive beam sequence of the second node based on the indexes of the candidate beams and/or the angles corresponding to the indexes of the candidate beams. The coordinating node can determine the transmit beam sequence of the first node and the receive beam sequence of the second node based on the quantity of candidate beams. In this way, the first node and the second node may perform beam sweeping and alignment based on the corresponding beam sequence, to quickly match an optimal beam. This reduces the overheads and latency of beam sweeping.

With reference to the first aspect, in a possible implementation, that the coordinating node determines beam information of the first node and beam information of the second node based on the first information includes: The coordinating node determines at least one of an index of the transmit beam for the first node and an angle corresponding to the index of the transmit beam for the first node based on at least one of the index of the candidate beam for the first node and the angle corresponding to the index of the candidate beam for the first node. The coordinating node determines at least one of an index of the receive beam for the second node and an angle corresponding to the index of the receive beam for the second node based on at least one of the index of the candidate beam for the second node and the angle corresponding to the index of the candidate beam for the second node.

The coordinating node can determine indexes of beams for the first node and the second node and/or angles corresponding to the indexes of the beams for the first node and the second node based on the indexes of the candidate beams and/or the angles corresponding to the indexes of the candidate beams. Therefore, the first node and the second node may perform beam sweeping by using corresponding beams. This reduces a beam sweeping range, and reduces the latency and the overheads.

With reference to the first aspect, in a possible implementation, the first information further includes at least one of first sub-information and second sub-information. The first sub-information includes a direction of a first link, a length of the first link, a direction of a second link, and a length of the second link. The second sub-information includes the location information of the first node and the location information of the second node. The first link is a link between the first node and the third node. The second link is a link between the second node and the third node. That the coordinating node determines beam information of the first node and beam information of the second node based on the first information includes: The coordinating node determines the beam information of the first node based on at least one of the first sub-information and the second sub-information and the information about the candidate beam for the first node. The coordinating node determines the beam information of the second node based on at least one of the first sub-information and the second sub-information and the information about the candidate beam for the second node.

Optionally, the coordinating node determines the direction of the third link based on at least one of the first sub-information and the second sub-information, and determines the beam information of the first node and the second node based on the direction of the third link, where the third link is a link that is between the first node and the second node and that is used for communication.

The coordinating node may determine the direction of the third link based on the length and the direction of the first link, the length and the direction of the second link, and a geometric relationship, and determine the beam information of the first node and the second node based on the length of the third link and the information about the candidate beams.

The coordinating node may further determine the direction of the third link based on the location information of the first node and the location information of the second node, and determine the beam information of the first node and the second node based on the direction of the third link and the information about the candidate beams.

Therefore, the coordinating node can select, from the information about the candidate beams, beams close to the direction of the third link as communication beams for the first node and the second node, to reduce the beam sweeping range when the first node is connected to the second node, and reduce the latency and the overheads.

With reference to the first aspect, in a possible implementation, before the determining beam information of the first node and beam information of the second node, the method further includes: The coordinating node determines a distance between the first node and the second node based on at least one of the first sub-information and the second sub-information. When the distance between the first node and the second node is less than a preset threshold, the coordinating node determines the beam information of the first node and the beam information of the second node.

When the distance between the first node and the second node is less than the preset threshold, quality of a channel during communication of the first node and the second node does not fail to meet a requirement due to a long distance, so that unnecessary connections and configurations are reduced, and coordination overheads of the coordinating node and reporting overheads of the first node and the second node are reduced.

With reference to the first aspect, in a possible implementation, the method further includes: The coordinating node performs at least one of the following operations: sending transmission resource information of the first node to the first node; or sending reception resource information of the second node to the second node. The transmission resource information of the first node indicates a resource of the transmit beam for the first node, and the reception resource information of the second node indicates a resource of the receive beam for the second node.

The coordinating node configures the resource of the transmit or receive beam for the first node and the second node, to handle duplex matching and avoid a resource conflict.

Optionally, the coordinating node determines resource information of the first node and the second node based on candidate resource information of the first node and the second node.

With reference to the first aspect, in a possible implementation, the method further includes: The coordinating node is the second node or the third node. The coordinating node sends transmit power information of the first node to the first node. The transmit power information of the first node indicates transmit power of the first node.

Optionally, the coordinating node determines the transmit power of the first node based on obtained third information. The third information includes at least one of information about a distance between the first node and the second node, information about an antenna gain, on the first link, of the first node, information about an antenna gain, on the second link, of the second node, and path loss information that is of the third link and that is predicted by the coordinating node. The third link is a link that is between the first node and the second node and that is used for communication. The coordinating node determines the transmit power of the first node based on the third information. A link between the third node and the first node is the first link. A link between the third node and the second node is the second link.

The coordinating node determines transmit power of the first node when the first node communicates with the second node, to ensure appropriate transmit power, and avoid impact on another link when the power is high. When the power is low, the quality of the channel is not high, and the transmit power needs to be increased.

With reference to the first aspect, in a possible implementation, the method further includes: The coordinating node is the first node or the third node. The coordinating node sends feedback resource information of the second node to the second node. The feedback resource information of the second node indicates a feedback resource of the second node. The feedback resource is used to feed back, to the coordinating node, at least one of a status of beam pairing between the first node and the second node, a status of data transmission between the first node and the second node, and quality of a channel between the first node and the second node.

The coordinating node configures the feedback resource of the second node, so that the second node can feed back, to the coordinating node in a timely manner, the status of beam pairing between the first node and the second node, the status of data transmission between the first node and the second node, and the quality of the channel between the first node and the second node. When beam pairing fails, data transmission fails, or the quality of the channel is poor, beam reconfiguration or selection of another beam may be triggered in a timely manner for communication.

With reference to the first aspect, in a possible implementation, the first node, the second node, and the third node all use a global coordinate system GCS.

All the three nodes use the GCS. This ensures that the three nodes can understand direction-related parameters of other nodes when performing signaling interaction, and improves an information exchange speed.

With reference to the first aspect, in a possible implementation, the first node or the second node or both use a local coordinate system LCS, and the coordinating node uses the global coordinate system GCS. That the coordinating node determines the beam information of the first node and/or the beam information of the second node based on first reference information includes: The coordinating node covers information about candidate beams corresponding to the LCS in the first reference information into information about candidate beams corresponding to the GCS, to obtain converted first reference information. The coordinating node determines, based on the converted first reference information, information about candidate beams that are of the first node and the second node and that correspond to the GCS. The coordinating node converts the information about the candidate beams that are of the first node and the second node and that correspond to the GCS into beam information corresponding to the LCS, to obtain the beam information of the first node and/or the beam information of the second node.

When the three nodes use different coordinate systems, the coordinating node may convert information that is about the candidate beams and that is related to the coordinate system into information about a coordinate system in which the coordinating node is located, so that the technical solutions of the application can be applied to a wider scope, and application scenarios of the application can be increased.

With reference to the first aspect, in a possible implementation, the coordinating node is the third node. That the coordinating node obtains the first information includes: The coordinating node directly obtains the information about the candidate beam for the first node from the first node; and the coordinating node directly obtains the information about the candidate beam for the second node from the second node. Alternatively, the coordinating node is one of the first node and the second node. That the coordinating node obtains the first information includes: The coordinating node indirectly obtains the information about the candidate beam for the other one of the first node and the second node via the third node.

When the coordinating node is not the first node or the second node that needs to establish communication, the coordinating node may directly obtain the information about the candidate beam for the first node or the second node via a link between the coordinating node and the first node or the second node. When the coordinating node is either the first node or the second node, the coordinating node may obtain information about a candidate beam for a peer-side node of the third link via the third node, so that a change of the coordinating node does not affect beam information configuration, and timely and effective information transmission are ensured.

With reference to the first aspect, in a possible implementation, the method further includes: The coordinating node performs at least one of the following operations: The coordinating node sends first indication information to the first node, where the first indication information includes the beam information of the first node; or the coordinating node sends second indication information to the second node, where the second indication information includes the beam information of the second node.

After configuring the beam information for the first node and/or the second node, the coordinating node may send the configured beam information to the first node and/or the second node, so that the first node or the second node or both perform communication based on the beam information, to avoid full-range beam sweeping and reduce the overheads of beam sweeping.

With reference to the first aspect, in a possible implementation, the coordinating node is the third node, and the third node is a relay node or a source node.

The source node or the relay node serves as the coordinating node to assist in a link establishment process, so that the latency and the overheads of beam sweeping can be reduced.

With reference to the first aspect, in a possible implementation, the coordinating node is the first node, or the coordinating node is a source node or a sink node.

With reference to the first aspect, in a possible implementation, the coordinating node is determined through negotiation among the first node, the second node, and the third node, or is a preconfigured node.

The coordinating node may be a node that is determined through negotiation or is preconfigured, so that the coordinating node may have a strong capability of obtaining location information, direction information, and distance information, may have a strong processing capability or computing capability, or may be close to a location of another node, to facilitate signaling transmission in a configuration process.

According to a second aspect, a beam configuration method is provided. The method is applied to a communication system. The communication system includes a first node, a second node, and a third node. A coordinating node is the third node or the second node. The method includes: The first node sends information about a candidate beam for the first node to the coordinating node. The first node receives beam information of the first node from the coordinating node. The beam information of the first node indicates a transmit beam or a receive beam for the first node.

In the technical solutions provided in the application, the first node sends the information about the candidate beam to the coordinating node, so that the coordinating node can determine, from the information about the candidate beam, a beam used by the first node to communicate with the second node. This reduces overheads and a latency.

Herein, the first node may be a transmit node, or may be a receive node. When the first node is the transmit node, the beam information of the first node indicates the transmit beam for the first node. When the first node is the receive node, the beam information of the first node indicates the receive beam for the first node.

With reference to the second aspect, in a possible implementation, before the first node sends the information about the candidate beam for the first node to the coordinating node, the method further includes: The first node receives first request information sent by the coordinating node. The first request information indicates the first node to report the information about the candidate beam for the first node.

With reference to the second aspect, in a possible implementation, the information about the candidate beam for the first node includes information related to at least one of an angle range and a geographical range.

With reference to the second aspect, in a possible implementation, the information about the candidate beam for the first node includes at least one of an index of the candidate beam for the first node, an angle corresponding to the index of the candidate beam for the first node, and a quantity of candidate beams for the first node.

With reference to the second aspect, in a possible implementation, the quantity of candidate beams for the first node is determined by the first node based on location information of the first node and location information of the second node.

With reference to the second aspect, in a possible implementation, the location information of the second node is received by the first node from the coordinating node.

With reference to the second aspect, in a possible implementation, the beam information of the first node includes at least one of an index of a beam for the first node and an angle corresponding to the index of the beam for the first node; or the beam information of the first node includes a beam sequence of the first node.

With reference to the second aspect, in a possible implementation, the beam information of the first node is determined based on at least one of first sub-information and second sub-information and the information about the candidate beam for the first node. The first sub-information includes a direction of a first link, a length of the first link, a direction of a second link, and a length of the second link. The second sub-information includes the location information of the first node and the location information of the second node. The first link is a link between the first node and the third node. The second link is a link between the second node and the third node.

With reference to the second aspect, in a possible implementation, the method further includes: The first node sends candidate resource information of the first node to the coordinating node. The candidate resource information of the first node is used by the coordinating node to determine at least one of a resource of the transmit beam or the receive beam for the first node and a feedback resource of the first node. The feedback resource is used to feed back, to the coordinating node, at least one of a status of beam pairing between the first node and the second node, a status of data transmission between the first node and the second node, and quality of a channel between the first node and the second node.

With reference to the second aspect, in a possible implementation, the method further includes: The first node receives resource information of the first node from the coordinating node. The resource information of the first node includes at least one of the resource of the transmit beam or the receive beam for the first node and the feedback resource of the first node. The feedback resource is used to feed back, to the coordinating node, at least one of the status of beam pairing between the first node and the second node, the status of data transmission between the first node and the second node, and the quality of the channel between the first node and the second node.

With reference to the second aspect, in a possible implementation, the method further includes: The first node sends information about an antenna gain of the first node to the coordinating node. The information about the antenna gain is used by the coordinating node to determine transmit power of the first node on a third link. The third link is a link that is between the first node and the second node and that is used for communication.

With reference to the second aspect, in a possible implementation, the method further includes: The first node is the transmit node in the first node and the second node. The first node receives transmit power information of the first node from the coordinating node. The transmit power information indicates the transmit power of the first node.

With reference to the second aspect, in a possible implementation, the first node, the second node, and the third node all use a global coordinate system GCS.

With reference to the second aspect, in a possible implementation, the first node uses the global coordinate system GCS, and the coordinating node uses a local coordinate system LCS. The method further includes: The first node sends a conversion coefficient from the LCS to the GCS to the coordinating node. The conversion coefficient from the LCS to the GCS is used by the coordinating node to configure beam information corresponding to the GCS for the first node.

With reference to the second aspect, in a possible implementation, the coordinating node is the third node. That the first node sends information about a candidate beam for the first node to the coordinating node includes: The first node sends the information about the candidate beam for the first node to the coordinating node. Alternatively, the coordinating node is the second node. That the first node sends information about a candidate beam for the first node to the coordinating node includes: The first node sends the information about the candidate beam for the first node to the coordinating node via the third node.

With reference to the second aspect, in a possible implementation, the first node is any one of a relay node, a sink node, or a source node.

With reference to the second aspect, in a possible implementation, a distance between the first node and the second node is less than a preset threshold.

For beneficial effect that can be achieved by the method according to any one of the second aspect or the implementations of the second aspect, refer to corresponding beneficial effect in the method according to the first aspect. Details are not described herein again.

According to a third aspect, a beam configuration method is provided. The method is applied to a communication system. The communication system includes a first node, a second node, and a third node. A coordinating node is the third node or the second node. The method includes: The first node sends information about a candidate beam for the first node to the coordinating node. The first node receives beam information of the first node from the coordinating node. The beam information of the first node indicates a transmit beam for the first node.

In the technical solutions provided in the application, the first node serves as a transmit node when the first node communicates with the second node, and sends the information about the candidate beam for the first node to the coordinating node, so that the coordinating node can determine transmit beam information for the first node based on the information about the candidate beam. This reduces overheads and a latency.

With reference to the third aspect, in a possible implementation, before the first node sends the information about the candidate beam for the first node to the coordinating node, the method further includes: The first node receives first request information sent by the coordinating node. The first request information indicates the first node to report the information about the candidate beam for the first node.

With reference to the third aspect, in a possible implementation, the information about the candidate beam for the first node includes information related to at least one of an angle range and a geographical range.

With reference to the third aspect, in a possible implementation, the information about the candidate beam for the first node includes at least one of an index of the candidate beam for the first node, an angle corresponding to the index of the candidate beam for the first node, and a quantity of candidate beams for the first node.

With reference to the third aspect, in a possible implementation, the beam information of the first node includes at least one of an index of a beam for the first node and an angle corresponding to the index of the beam for the first node; or the beam information of the first node includes a beam sequence of the first node.

With reference to the third aspect, in a possible implementation, the quantity of candidate beams for the first node is determined by the first node based on location information of the first node and location information of the second node.

With reference to the third aspect, in a possible implementation, the location information of the second node is received by the first node from the coordinating node.

With reference to the third aspect, in a possible implementation, the beam information of the first node is determined based on at least one of first sub-information and second sub-information and the information about the candidate beam for the first node. The first sub-information includes a direction of a first link, a length of the first link, a direction of a second link, and a length of the second link. The second sub-information includes the location information of the first node and the location information of the second node.

With reference to the third aspect, in a possible implementation, the method further includes: The first node receives resource information of the first node from the coordinating node. The resource information of the first node indicates a resource of the transmit beam for the first node.

With reference to the third aspect, in a possible implementation, the method further includes: The first node sends information about an antenna gain, on the first link, of the first node to the coordinating node. The information about the antenna gain is used by the coordinating node to determine transmit power of the first node on a third link. The third link is a link that is between the first node and the second node and that is used for communication.

With reference to the third aspect, in a possible implementation, the method further includes: The first node is the transmit node in the first node and the second node. The first node receives transmit power information of the first node from the coordinating node. The transmit power information of the first node indicates the transmit power of the first node.

With reference to the third aspect, in a possible implementation, the first node, the second node, and the third node all use a global coordinate system GCS.

With reference to the third aspect, in a possible implementation, the first node uses the global coordinate system GCS, and the coordinating node uses a local coordinate system LCS. The method further includes: The first node sends a conversion coefficient from the LCS to the GCS to the coordinating node. The conversion coefficient from the LCS to the GCS is used by the coordinating node to configure beam information corresponding to the GCS for the first node.

With reference to the third aspect, in a possible implementation, the coordinating node is the third node. That the first node sends information about a candidate beam for the first node to the coordinating node includes: The first node sends the information about the candidate beam for the first node to the coordinating node. Alternatively, the coordinating node is the second node. That the first node sends information about a candidate beam for the first node to the coordinating node includes: The first node sends the information about the candidate beam for the first node to the coordinating node via the third node.

With reference to the third aspect, in a possible implementation, the first node is any one of a relay node, a sink node, or a source node.

With reference to the third aspect, in a possible implementation, a length of the third link is less than a preset threshold.

For beneficial effect that can be achieved by the method according to any one of the third aspect or the implementation methods of the third aspect, refer to corresponding beneficial effect in the method according to the first aspect. Details are not described herein again.

According to a fourth aspect, a beam configuration method is provided. The method is applied to a communication system. The communication system includes a first node, a second node, and a third node. A coordinating node is the third node or the first node. The method includes: The second node sends information about a candidate beam for the first node to the coordinating node. The second node receives beam information of the second node from the coordinating node. The beam information of the second node indicates a receive beam for the second node.

In the technical solutions provided in the application, the second node serves as a receive node when the first node communicates with the second node, and sends information about a candidate beam for the second node to the coordinating node, so that the coordinating node can determine receive beam information of the second node based on the information about the candidate beam. This reduces overheads and a latency.

With reference to the fourth aspect, in a possible implementation, before the second node sends the information about the candidate beam for the second node to the coordinating node, the method further includes: The second node receives second request information sent by the coordinating node. The second request information indicates the second node to report the information about the candidate beam for the second node.

With reference to the fourth aspect, in a possible implementation, the information about the candidate beam for the second node includes information related to at least one of an angle range and a geographical range.

With reference to the fourth aspect, in a possible implementation, the information about the candidate beam for the second node includes at least one of an index of the candidate beam for the second node, an angle corresponding to the index of the candidate beam for the second node, and a quantity of candidate beams for the second node.

With reference to the fourth aspect, in a possible implementation, the quantity of candidate beams for the second node is determined by the second node based on location information of the first node and location information of the second node.

With reference to the fourth aspect, in a possible implementation, the location information of the first node is received by the second node from the coordinating node.

With reference to the fourth aspect, in a possible implementation, the beam information of the second node includes at least one of an index of a beam for the second node and an angle corresponding to the index of the beam for the second node; or the beam information of the second node includes a beam sequence of the second node.

With reference to the fourth aspect, in a possible implementation, the beam information of the second node is determined based on at least one of first sub-information and second sub-information and the information about the candidate beam for the first node. The first sub-information includes a direction of a first link, a length of the first link, a direction of a second link, and a length of the second link. The second sub-information includes the location information of the first node and the location information of the second node.

With reference to the fourth aspect, in a possible implementation, the method further includes: The second node receives resource information of the second node from the coordinating node. The resource information of the second node indicates at least one of a resource of the receive beam for the second node and a feedback resource of the second node. The feedback resource is used to feed back, to the coordinating node, at least one of a status of beam pairing between the first node and the second node, a status of data transmission between the first node and the second node, and quality of a channel between the first node and the second node.

With reference to the fourth aspect, in a possible implementation, the method further includes: The second node sends information about an antenna gain, on the second link, of the second node to the coordinating node. The information about the antenna gain is used by the coordinating node to determine transmit power of the first node on a third link. The third link is a link that is between the first node and the second node and that is used for communication.

With reference to the fourth aspect, in a possible implementation, the first node, the second node, and the third node all use a global coordinate system GCS.

With reference to the fourth aspect, in a possible implementation, the first node uses the global coordinate system GCS, and the coordinating node uses a local coordinate system LCS. The method further includes: The first node sends a conversion coefficient from the LCS to the GCS to the coordinating node. The conversion coefficient from the LCS to the GCS is used by the coordinating node to configure beam information corresponding to the GCS for the first node.

With reference to the fourth aspect, in a possible implementation, the coordinating node is the third node. That the second node sends information about a candidate beam for the second node to the coordinating node includes: The second node directly sends the information about the candidate beam for the second node to the coordinating node. Alternatively, the coordinating node is the first node. That the second node sends information about a candidate beam for the second node to the coordinating node includes: The second node indirectly sends the information about the candidate beam for the second node to the coordinating node via the third node.

With reference to the fourth aspect, in a possible implementation, the second node is any one of a relay node, a sink node, or a source node.

With reference to the fourth aspect, in a possible implementation, a length of the third link is less than a preset threshold.

For beneficial effect that can be achieved by the method according to any one of the fourth aspect or the implementations of the fourth aspect, refer to corresponding beneficial effect in the method according to the first aspect. Details are not described herein again.

According to a fifth aspect, a beam configuration method is provided. The method includes: A first node obtains location information of a second node. The first node determines beam information of the first node based on location information of the first node, the location information of the second node, and information about a candidate beam for the first node. The beam information of the first node indicates a transmit or receive beam for the first node.

In the technical solutions provided in the application, the first node determines the beam information of the first node based on the location information of the first node and the obtained location information of the second node, to prevent the first node from performing full-range beam sweeping when the first node communicates with the second node. This can reduce overheads and a latency.

With reference to the fifth aspect, in a possible implementation, that the first node determines beam information of the first node based on location information of the first node, the location information of the second node, and information about a candidate beam for the first node includes: The first node determines a direction of a third link based on the location information of the first node and the location information of the second node. The first node determines the information about the candidate beam for the first node based on the information about the candidate beam for the first node and the direction of the third link. The third link is a link that is between the first node and the second node and that is used for communication.

The first node may determine the direction of the third link based on the location information of the first node and the location information of the second node, and then select, from beams for the first node based on the direction of the third link, a beam close to the direction as the candidate beam. This reduces a beam sweeping range, and reduces the overheads and the latency.

With reference to the fifth aspect, in a possible implementation, the information about the candidate beam for the first node includes information related to at least one of an angle range and a geographical range.

That the information about the candidate beam includes information related to at least one of an angle range and a geographical location range means that the first node determines, based on locations of the second node and the first node, all beam information or a part of the beam information as the information about the candidate beam. When the information about the candidate beam is the part of the beam information, the first node may further determine the beam information of the first node from the part of the beam information. This reduces the beam sweeping range, and reduces the overheads and the latency.

With reference to the fifth aspect, in a possible implementation, that the first node obtains location information of a second node includes: The first node obtains the location information of the second node via a third node. A link between the third node and the first node is a first link. A link between the third node and the second node is a second link.

Because there is no direct link between the first node and the second node, the first node needs to obtain the location information of the second node via the third node. The third node assists in information transmission between the first node and the second node, so that the first node determines beam information for communication of the first node and the second node. This reduces overheads and a latency of sweeping.

With reference to the fifth aspect, in a possible implementation, the method further includes: The first node forwards the location information of the first node to the second node via the third node. The location information of the first node is used by the second node to determine beam information of the second node.

The first node further forwards the location information of the first node to the second node via the third node, so that the second node may also determine the beam information of the second node based on the location information of the first node. This reduces a beam sweeping range when the second node communicates with the first node, and reduces the latency and the overheads.

With reference to the fifth aspect, in a possible implementation, before the first node forwards the location information of the first node to the second node via the third node, the method further includes: The first node receives first request information sent by the third node. The first request information indicates the first node to report coordinates corresponding to a first geographical range.

The first node may send, based on a request, the coordinates corresponding to the first geographical range to the second node via the third node, so that when the first node needs to communicate with the second node, the first node reports, in a timely manner, the coordinates corresponding to the first geographical range in response to the request information, and the second node determines the beam information of the second node based on this in a timely manner. This reduces the beam sweeping range, and reduces the latency and the overheads.

With reference to the fifth aspect, in a possible implementation, the location information of the second node includes location coordinates of the second node and/or a geographical location range of the second node.

When the location information of the second node is the coordinates, the angle range of the information about the candidate beam that may be determined by the first node is small, and the first node may perform beam sweeping in a smaller range.

When the location information of the second node is the geographical location range, overheads required by the second node to report the geographical location range are small, so that overheads of the second node are reduced. The first node performs beam sweeping based on the geographical location range of the second node. This reduces the overheads and latency of sweeping of the first node.

With reference to the fifth aspect, in a possible implementation, the method further includes: The first node receives resource information of the first node from the third node. The resource information of the first node indicates a resource of the transmit or receive beam for the first node and/or a feedback resource of the first node. The feedback resource is used to feed back, to the third node, at least one of a status of beam pairing of beams between the first node and the second node, a status of data transmission between the first node and the second node, and quality of a channel between the first node and the second node.

The third node may configure, by obtaining a candidate resource of the first node with reference to a candidate resource of the second node, resources corresponding to communication beams for the first node and the second node, to handle duplex matching and reduce a resource conflict.

The third node may further configure the feedback resource for a receive node in the first node and the second node to feed back the status of beam pairing, the status of data transmission, and the quality of the channel, so that when data transmission fails, or the quality of the channel is excessively poor, timely re-determining of the beam information is triggered. This reduces an information transmission latency, and improves data transmission reliability.

With reference to the fifth aspect, in a possible implementation, the method further includes: The first node is a transmit node in the first node and the second node. The first node sends information about an antenna gain, on the first link, of the first node to the third node. The information about the antenna gain is used by the third node to determine transmit power of the first node.

With reference to the fifth aspect, in a possible implementation, the method further includes: The first node is the transmit node in the first node and the second node. The first node receives transmit power information of the first node sent by the third node. The transmit power information indicates the transmit power of the first node.

The third node determines the transmit power of the first node when the first node communicates with the second node, to ensure appropriate transmit power, and avoid impact on another link when the power is high. When the power is low, the quality of the channel is not high, and the transmit power needs to be increased.

According to a sixth aspect, an apparatus is provided. The apparatus is used in a communication system. The communication system includes a first node, a second node, and a third node. The apparatus is a coordinating node. The coordinating node is any one of the first node, the second node, and the third node. The apparatus includes: a transceiver unit, configured to obtain first information, where the first information includes information about a candidate beam for the first node and information about a candidate beam for the second node; and a processing unit, configured to determine beam information of the first node and beam information of the second node based on the first information, where the beam information of the first node indicates a transmit beam for the first node, and the beam information of the second node indicates a receive beam for the second node.

In the technical solutions provided in the application, the transceiver unit of the apparatus obtains the information about the candidate beam for the first node and the information about the candidate beam for the second node, and the processing unit determines the beam information of the first node and the beam information of the second node based on the information. This reduces overheads and a latency of beam sweeping when the first node communicates with the second node.

With reference to the sixth aspect, in a possible implementation, the transceiver unit is specifically configured to obtain the first information in at least one of the following manners: receiving the information that is about the candidate beam for the first node and that is reported by the first node; or receiving the information that is about the candidate beam for the second node and that is reported by the second node.

With reference to the sixth aspect, in a possible implementation, the transceiver unit is further configured to perform at least one of the following operations: sending first request information to the first node, where the first request information indicates the first node to report the information about the candidate beam for the first node; or sending second request information to the second node, where the second request information indicates the second node to report the information about the candidate beam for the second node.

With reference to the sixth aspect, in a possible implementation, the information about the candidate beam includes information related to at least one of an angle range and a geographical range.

With reference to the sixth aspect, in a possible implementation, the information about the candidate beam for the first node includes at least one of an index of the candidate beam for the first node, an angle corresponding to the index of the candidate beam for the first node, and a quantity of candidate beams for the first node. The information about the candidate beam for the second node includes at least one of an index of the candidate beam for the second node, an angle corresponding to the index of the candidate beam for the second node, and a quantity of candidate beams for the second node.

With reference to the sixth aspect, in a possible implementation, the quantity of candidate beams is determined based on location information of the first node and location information of the second node.

With reference to the sixth aspect, in a possible implementation, the beam information of the first node includes at least one of an index of the transmit beam for the first node and an angle corresponding to the index of the transmit beam for the first node, and the beam information of the second node includes at least one of an index of the receive beam for the second node and an angle corresponding to the index of the receive beam for the second node; or the beam information of the first node includes a transmit beam sequence of the first node, and the beam information of the second node includes a receive beam sequence of the second node.

With reference to the sixth aspect, in a possible implementation, the first information further includes at least one of first sub-information and second sub-information. The first sub-information includes a direction of a first link, a length of the first link, a direction of a second link, and a length of the second link. The second sub-information includes the location information of the first node and the location information of the second node. The first link is a link between the third node and the first node. The second link is a link between the third node and the second node. The processing unit is specifically configured to: determine the beam information of the first node based on at least one of the first sub-information and the second sub-information and the information about the candidate beam for the first node; and determine the beam information of the second node based on at least one of the first sub-information and the second sub-information and the information about the candidate beam for the second node.

With reference to the sixth aspect, in a possible implementation, the processing unit is further configured to: determine a distance between the first node and the second node based on at least one of the first sub-information and the second sub-information; and when the distance between the first node and the second node is less than a preset threshold, determine the beam information of the first node and the beam information of the second node.

With reference to the sixth aspect, in a possible implementation, the transceiver unit is further configured to obtain second information. The second information includes candidate resource information of the first node and candidate resource information of the second node. The processing unit is further configured to determine transmission resource information of the first node and reception resource information of the second node based on the second information. The transmission resource information of the first node indicates a resource of the transmit beam for the first node, and the reception resource information of the second node indicates a resource of the receive beam for the second node.

With reference to the sixth aspect, in a possible implementation, the transceiver unit is further configured to send the transmission resource information of the first node and/or the reception resource information of the second node. The transmission resource information of the first node indicates the resource of the transmit beam for the first node, and the reception resource information of the second node indicates the resource of the receive beam for the second node.

With reference to the sixth aspect, in a possible implementation, the transceiver unit is further configured to obtain third information. The third information includes at least one of information about the distance between the first node and the second node, information about an antenna gain, on the first link, of the first node, information about an antenna gain, on the second link, of the second node, and path loss information that is of a third link and that is predicted by the coordinating node. The third link is a link that is between the first node and the second node and that is used for communication. The processing unit is further configured to determine transmit power of the first node based on the third information.

With reference to the sixth aspect, in a possible implementation, the transceiver unit is further configured to send transmit power information of the first node to the first node. The transmit power information of the first node indicates the transmit power of the first node.

With reference to the sixth aspect, in a possible implementation, the processing unit is further configured to determine feedback resource information of the second node. The feedback resource information of the second node indicates a feedback resource of the second node. The feedback resource is used to feed back, to the coordinating node, at least one of a status of beam pairing between the first node and the second node, a status of data transmission between the first node and the second node, and quality of a channel between the first node and the second node.

With reference to the sixth aspect, in a possible implementation, the coordinating node is the third node, and the transceiver unit is specifically configured to: obtain the information about the candidate beam for the first node via the first node; and obtain the information about the candidate beam for the second node via the second node. Alternatively, the coordinating node is one of the first node and the second node, and the transceiver unit is specifically configured to obtain the information about the candidate beam for the other of the first node and the second node via the third node.

With reference to the sixth aspect, in a possible implementation, the apparatus further includes the transceiver unit. The transceiver unit is configured to perform at least one of the following operations: sending first indication information to the first node, where the first indication information includes the beam information of the first node; or sending second indication information to the second node, where the second indication information includes the beam information of the second node.

According to a seventh aspect, an apparatus is provided. The apparatus is used in a communication system. The communication system includes a first node, a second node, and a third node. A coordinating node is the third node or the second node. The apparatus is the first node. The apparatus includes: a transceiver unit, configured to send information about a candidate beam for the first node to the coordinating node. The transceiver unit is further configured to receive beam information of the first node from the coordinating node. The beam information of the first node indicates a transmit beam or a receive beam for the first node.

In the technical solutions provided in the application, the transceiver unit of the apparatus sends information about a candidate beam for the apparatus, and the transceiver unit receives beam information configured by the coordinating node for the apparatus. The beam information is determined based on the information about the candidate beam, so that the first node performs beam sweeping by using the beam information. This reduces a beam sweeping range when the first node communicates with the second node, and reduces overheads and a latency.

With reference to the seventh aspect, in a possible implementation, the transceiver unit is further configured to receive first request information sent by the coordinating node. The first request information indicates the first node to report the information about the candidate beam for the first node.

With reference to the seventh aspect, in a possible implementation, the information about the candidate beam for the first node includes information related to at least one of an angle range and a geographical range.

With reference to the seventh aspect, in a possible implementation, the information about the candidate beam for the first node includes at least one of an index of the candidate beam for the first node, an angle corresponding to the index of the candidate beam for the first node, and a quantity of candidate beams for the first node.

With reference to the seventh aspect, in a possible implementation, the quantity of candidate beams for the first node is determined based on location information of the first node and location information of the second node.

With reference to the seventh aspect, in a possible implementation, the location information of the second node is received from the coordinating node.

With reference to the seventh aspect, in a possible implementation, the beam information of the first node includes at least one of an index of a beam for the first node and an angle corresponding to the index of the beam for the first node; or the beam information of the first node includes a beam sequence of the first node.

With reference to the seventh aspect, in a possible implementation, the beam information of the first node is determined based on at least one of first sub-information and second sub-information and the information about the candidate beam for the first node. The first sub-information includes a direction of a first link, a length of the first link, a direction of a second link, and a length of the second link. The second sub-information includes the location information of the first node and the location information of the second node.

With reference to the seventh aspect, in a possible implementation, the transceiver unit is further configured to send candidate resource information of the first node to the coordinating node. The candidate resource information of the first node is used by the coordinating node to determine at least one of a resource of the transmit beam or the receive beam for the first node and a feedback resource of the first node. The feedback resource is used to feed back, to the coordinating node, at least one of a status of beam pairing between the first node and the second node, a status of data transmission between the first node and the second node, and quality of a channel between the first node and the second node.

With reference to the seventh aspect, in a possible implementation, the transceiver unit is further configured to receive resource information from the coordinating node. The resource information indicates at least one of the resource of the transmit beam or the receive beam for the first node and the feedback resource of the first node.

With reference to the seventh aspect, in a possible implementation, the transceiver unit is further configured to send information about an antenna gain, on the first link, of the first node to the coordinating node. The information about the antenna gain is used by the coordinating node to determine transmit power of the first node on a third link. The third link is a link that is between the first node and the second node and that is used for communication.

With reference to the seventh aspect, in a possible implementation, the first node is a transmit node in the first node and the second node. The transceiver unit is further configured to receive transmit power information of the first node sent by the coordinating node. The transmit power information of the first node indicates the transmit power of the first node.

With reference to the seventh aspect, in a possible implementation, the coordinating node is the third node, and the transceiver unit is specifically configured to send the information about the candidate beam for the first node to the coordinating node via the first node. Alternatively, the coordinating node is the second node, and the transceiver unit is specifically configured to send the information about the candidate beam for the first node to the coordinating node via the third node.

According to an eighth aspect, an apparatus is provided. The apparatus includes modules or units configured to perform the method according to any one of the third aspect or the possible implementations of the third aspect. The modules or units may be implemented by a hardware circuit, software, or a combination of a hardware circuit and software.

According to a ninth aspect, an apparatus is provided. The apparatus includes modules or units configured to perform the method according to any one of the fourth aspect or the possible implementations of the fourth aspect. The modules or units may be implemented by a hardware circuit, software, or a combination of a hardware circuit and software.

According to a tenth aspect, an apparatus is provided. The apparatus includes modules or units configured to perform the method according to any one of the fifth aspect or the possible implementations of the fifth aspect. The modules or units may be implemented by a hardware circuit, software, or a combination of a hardware circuit and software.

According to an eleventh aspect, an apparatus is provided. The apparatus includes at least one processor. The processor is coupled to a memory. The memory is configured to store instructions, to implement the method according to any one of the possible implementations of the first aspect to the fifth aspect. Optionally, the apparatus further includes the memory. The memory and the processor may be separately deployed, or may be deployed in a centralized manner. Optionally, the apparatus further includes a communication interface, and the processor is coupled to the communication interface.

According to a twelfth aspect, an apparatus is provided. The apparatus includes at least one logic circuit and an input/output interface. The logic circuit is configured to be coupled to the input/output interface, and transmit data through the input/output interface, to perform the method according to any one of the first aspect to the fifth aspect or the possible implementations of the first aspect to the fifth aspect.

According to a thirteenth aspect, a computer-readable storage medium is provided, where the computer-readable storage medium stores computer-executable instructions. When the computer-executable instructions are run on a computer, the computer is enabled to perform the method according to any one of the first aspect to the fifth aspect or the implementations of the first aspect to the fifth aspect.

According to a fourteenth aspect, a computer program product is provided. The computer program product includes computer program code. When the computer program code is run, a computer is enabled to perform the method according to any one of the first aspect to the fifth aspect or the implementations of the first aspect to the fifth aspect.

According to a fifteenth aspect, a system is provided. The system includes the apparatus according to any one of the fifth aspect or the implementations of the fifth aspect and the apparatus according to any one of the sixth aspect or the implementations of the sixth aspect, or includes the apparatus according to any one of the fifth aspect or the implementations of the fifth aspect, the apparatus according to any one of the seventh aspect or the implementations of the seventh aspect, and the apparatus according to any one of the eighth aspect or the implementations of the eighth aspect.

According to a sixteenth aspect, a communication system is provided. The system includes the first node, the second node, and the third node mentioned above.

It may be understood that any apparatus, chip system, computer-readable storage medium, or computer program product provided above is configured to perform a corresponding method provided above. Therefore, for beneficial effect that can be achieved by the apparatus, chip system, computer-readable storage medium, or computer program product, refer to beneficial effect in the corresponding method. Details are not described herein again.

### BRIEF DESCRIPTION OF DRAWINGS

FIG. 1 is a schematic diagram of an architecture of a communication system applicable to an embodiment of the application;
FIG. 2 is a schematic flowchart of a beam configuration method according to an embodiment of the application;
FIG. 3 is a schematic diagram of node location information in a beam configuration method according to an embodiment of the application;
FIG. 4 is a schematic flowchart of a beam configuration method according to an embodiment of the application;
FIG. 5 is a schematic flowchart of a beam configuration method according to an embodiment of the application;
FIG. 6 is a schematic diagram of a latency corresponding to a method shown in FIG. 5;
FIG. 7 is a schematic flowchart of another beam configuration method according to an embodiment of the application;
FIG. 8 is a schematic flowchart of a further beam configuration method according to an embodiment of the application;
FIG. 9 is a schematic diagram of a latency corresponding to a method shown in FIG. 8;
FIG. 10 is a schematic flowchart of a beam configuration method according to an embodiment of the application;
FIG. 11 is a schematic flowchart of a beam configuration method according to an embodiment of the application;
FIG. 12 is a schematic flowchart of a beam configuration method according to an embodiment of the application;
FIG. 13 is a schematic block diagram of an apparatus according to an embodiment of the application;
FIG. 14 is a schematic block diagram of an apparatus according to an embodiment of the application;
FIG. 15 is a schematic block diagram of an apparatus according to an embodiment of the application;
FIG. 16 is a schematic block diagram of an apparatus according to an embodiment of the application; and
FIG. 17 is a schematic block diagram of an apparatus according to an embodiment of the application.

### DESCRIPTION OF EMBODIMENTS

The following describes technical solutions in embodiments of the application with reference to accompanying drawings.

The technical solutions in embodiments of the application may be applied to various communication systems, including but not limited to: a global system for mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) mobile communication system (or also referred to as a new radio (new radio, NR) system), and a future mobile communication system such as 6G.

With evolution of wireless communication standards, frequencies of electromagnetic waves supported by communication systems gradually increase, for example, from a centimeter wave and a millimeter wave less than 100 GHz to a millimeter wave greater than 100 GHz, and then to optical communication of terahertz or hundreds of terahertz. As the frequencies increase, a diffraction capability of electromagnetic waves deteriorates, a path loss during propagation increases, and a coverage area correspondingly decreases. To maintain a specific coverage area, impact of the path loss needs to be reduced. Therefore, a beamforming technology is introduced into a mobile communication technology, and a directional beam is formed to effectively resist the path loss. Beamforming is a signal preprocessing technology based on an antenna array. Specifically, a weighting coefficient of each array element in the antenna array is adjusted through beamforming to generate the directional beam, to obtain an obvious array gain.

Massive multiple-input multiple-output (multiple-input multiple-output, MIMO) systems may obtain beams with strong directivity and high gains at both receive and transmit ends. Strong directivity also means that the coverage area is narrow, and communication is usually interrupted after deviation from a beam coverage area. Therefore, it is important to perform beam alignment at both the receive and transmit ends, and beam sweeping is a process of determining an appropriate communication beam.

In a process of establishing a communication link between two devices (for example, between a network device and a terminal device, or between two terminal devices), beam sweeping needs to be performed to align receive and transmit beams. For example, two devices need to first be synchronized before communicating with each other. Each of the two devices needs to perform periodic beam sweeping, so that another device discovers the device, or the device discovers another device, or the device establishes a connection. In each sweeping periodicity, each beam in all beam range or a large beam range needs to be used to separately send or receive a synchronization signal.

An example in which 5G new radio (New Radio, NR) is used to perform periodic beam sweeping on a synchronization signal block (synchronization signal block, SS block) is used, a plurality of different synchronization signal blocks may form a synchronization signal block burst set (burst set), and the synchronization signal block burst set is transmitted in a time window of 5 ms. A transmission periodicity of the synchronization signal block burst set may be configured to a value in {5, 10, 20, 40, 80, 160} ms. Therefore, 5G NR supports a minimum synchronization beam sweeping periodicity of 5 ms. At receive and transmit ends of NR, a beam sweeping manner based on time division multiplexing (time division multiplexing, TDM) is used for beam alignment, and an initial access latency is long.

In other words, when the device performs beam sweeping, blind sweeping in all beam range or the large beam range needs to be performed. Consequently, alignment time is long, a latency is long, energy consumption is high, and a requirement on fast access cannot be met. For the foregoing problem, the application provides a beam configuration method, to reduce overheads and a latency of beam sweeping, thereby improving access efficiency.

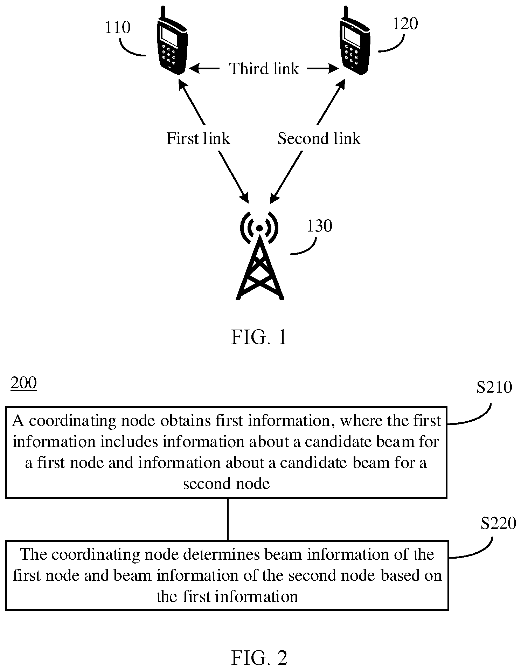

For ease of understanding embodiments of the application, a communication system applicable to embodiments of the application is first described in detail with reference to FIG. 1.

FIG. 1 is a schematic diagram of an architecture of a communication system applicable to an embodiment of the application. As shown in FIG. 1, the communication system includes a plurality of nodes, and any two of the plurality of nodes may discover each other or establish a communication link with each other. For example, the communication system may include a first node 110, a second node 120, and a third node 130. A link may be established between every two of the three nodes for communication.

Types of the nodes in the communication system are not limited in the embodiment of the application. FIG. 1 is used as an example. The first node 110, the second node 120, and the third node 130 may all be network devices, or may all be terminal devices, or some nodes are terminal devices, and some nodes are network devices.

For example, any node in FIG. 1 may be a terminal device. The terminal device may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device includes but is not limited to: a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 6G network, a terminal device in a future evolved public land mobile network (public land mobile network, PLMN), or the like. This is not limited in the embodiment of the application.

For example, any node in FIG. 1 may be a network device. The network device may be a device that provides a wireless communication function for the terminal device. The network device may be a base transceiver station (base transceiver station, BTS) in a global system for mobile communication (global system of mobile communication, GSM) or code division multiple access (code division multiple access, CDMA) system, or may be a NodeB (NodeB, NB) in a wideband code division multiple access (wideband code division multiple access, WCDMA) system, or may be an evolved NodeB (evolutional NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in the future 6G network, a network device in the future evolved PLMN network, or the like. This is not limited in the embodiment of the application.

It should be understood that the communication system may include at least three nodes. In FIG. 1, only an example in which the communication system includes three nodes is used to describe the technical solutions of the application. A quantity of nodes in the following embodiments should not be understood as a limitation on an application scope of the application.

In the communication system shown in FIG. 1, any two nodes may communicate with each other based on beamforming. For example, any one of the first node 110, the second node 120, and the third node 130 may have an antenna array. An application scenario of the application includes a low-latency and high-reliability communication scenario, for example, the application is applied to a communication scenario such as a factory, an Internet of Vehicles or vechile to everything or connected vehicle, or an uncrewed aerial vehicle. A system applicable to the embodiment of the application includes a system that uses a high-frequency spectrum for communication. Generally, the high-frequency spectrum, such as a millimeter wave, terahertz, and optical communication, is applied to a communication technology that needs to be based on beamforming.

FIG. 2 is a schematic flowchart of a beam configuration method according to an embodiment of the application.

A method 200 shown in FIG. 2 is applied to a communication system. The communication system may include a first node, a second node, and a third node. The method 200 may be executed by a coordinating node. The coordinating node may be any one of the first node, the second node, and the third node.

FIG. 1 is used as an example. The first node is, for example, the first node 110 in FIG. 1, the second node is, for example, the second node 120 in FIG. 1, and the third node is, for example, the third node 130 in FIG. 1. A first link is established between the third node 130 and the first node 110. Therefore, the third node 130 may communicate with the first node 110 via the first link. A second link is established between the third node 130 and the second node 120. Therefore, the third node 130 may communicate with the second node 120 via the second link. A third link between the first node 110 and the second node 120 may be a to-be-established link or a link of a to-be-determined beam. The method 200 shown in FIG. 2 may be performed by any node in the communication system shown in FIG. 1, for example, the first node 110, the second node 120, or the third node 130.

In the embodiment of the application, the method 200 may include step S210 and step S220. The following describes steps in detail with reference to the accompanying drawings.

S210: The coordinating node obtains first information.

The first information includes information about a candidate beam for the first node and information about a candidate beam for the second node.

The coordinating node may be any one of the first node, the second node, and the third node. In the embodiment of the application, the coordinating node is configured to perform beam configuration on the first node and the second node. The coordinating node may be predefined or preconfigured by the system. For example, the system determines a specific node that is in the first node, the second node, and the third node and that has a strong computing capability or a strong capability of determining a distance, a location, and a direction (beam angle) based on a current link as the coordinating node. For example, the coordinating node may be a road side unit (road side unit, RSU). Alternatively, the coordinating node may be determined by nodes in the communication system through negotiation, for example, determined by the first node, the second node, the third node, and adjacent nodes through negotiation. For example, if a node can directly or indirectly obtain related information of the first node and/or the second node on the to-be-established link, and coordination performed by the node can have small overheads and a short latency, it may be determined that the node is the coordinating node. For example, the coordinating node is a source node or a relay node.

It should be understood that coordination in the embodiment of the application may be understood as beam configuration performed on two nodes corresponding to the to-be-established link or a link of a to-be-determined beam.

In the embodiment of the application, a link between the third node and the first node is the first link, and the first link is an established link. To be specific, a transmit beam, a receive beam, resources corresponding to the transmit beam and the receive beam, and another related configuration information are configured between the first node and the third node. Therefore, the first node and the third node can perform data transmission by using the configured beams and resources.

Similarly, a link between the third node and the second node is the second link, and the second link is also an established link. The second node and the third node can perform data transmission by using the configured beams and resources.

In the embodiment of the application, data transmission cannot be directly performed between the first node and the second node. For example, no transmit beam or receive beam is configured between the first node and the second node, or even if the transmit beam or the receive beam is configured, there is no resource or other configuration information corresponding to the transmit beam or the receive beam.

In the embodiment of the application, the resource may be a time-frequency resource based on time division multiplexing or frequency division multiplexing (frequency division multiplex, FDM), a space resource based on space division multiplexing, or the like.

In the embodiment of the application, that the coordinating node obtains first information may be that the coordinating node receives the information that is about the candidate beam for the first node and that is reported by the first node; and/or the coordinating node receives the information that is about the candidate beam for the second node and that is reported by the second node.

Correspondingly, the first node report information about the candidate beams for the first node, and/or, the second node report information about the candidate beams for the first node.

In some embodiments, the first node and/or the second node may actively report the information about the respective candidate beams, for example, periodically report the information. In this way, the coordinating node may learn the information about the candidate beams for the first node and/or the second node in advance, so that the coordinating node does not need to send a request instruction while a latency is reduced. This reduces overheads of information exchange.

In some embodiments, the first node and/or the second node may report information about the respective candidate beams in response to a request of the coordinating node.

For example, before the coordinating node obtains the first information, the coordinating node may further perform the following actions: sending first request information to the first node, where the first request information indicates the first node to report the information about the candidate beam for the first node; and/or sending second request information to the second node, where the second request information indicates the second node to report the information about the candidate beam for the second node.

For example, when the coordinating node is the first node, before obtaining the first information, the coordinating node may send the second request information to the second node, where the second request information indicates the second node to report the information about the candidate beam for the second node. In this case, the first node may directly obtain the information about the candidate beam for the first node from the first node.

For another example, when the coordinating node is the second node, before obtaining the first information, the coordinating node may send the first request information to the first node, where the first request information indicates the first node to report the information about the candidate beam for the first node. In this case, the second node may directly obtain the information about the candidate beam for the second node from the second node.

For another example, when the coordinating node is the third node, before obtaining the first information, the coordinating node may send the first request information to the first node, where the first request information indicates the first node to report the information about the candidate beam for the first node; and send the second request information to the second node, where the second request information indicates the second node to report the information about the candidate beam for the second node.

Correspondingly, before the first node sends the information about the candidate beam for the first node to the coordinating node, the first node receives the first request information of the coordinating node; and/or before the second node sends the information about the candidate beam for the second node to the coordinating node, the second node receives the second request information of the coordinating node.

Therefore, the first node or the second node or both report the information about the respective candidate beams in response to the request of the coordinating node.

The foregoing request may mean that the coordinating node learns that there is to-be-sent data or the coordinating node estimates that a distance between the first node and the second node is less than a specific threshold, which triggers sending of the request information. For the first node and the second node, the request information is optional. The coordinating node sends a request message to the first node and/or the second node, so that the first node and/or the second node can report related information according to a requirement of the coordinating node. This ensures timely and effective sending of the information about the candidate beams.

In the embodiment of the application, the information about the candidate beam includes information related to at least one of an angle range and a geographical range.

In some embodiments, the information about the candidate beam for the first node or the second node may include information about all beams or a maximum quantity of correspondingly configured beams for the first node or the second node.

For example, the angle range is not limited, or the angle range is 360°, so that the information about the candidate beam for the first node or the second node includes the information about all beams or the maximum quantity of correspondingly configured beams for the first node or the second node.

In some other embodiments, the information about the candidate beam for the first node may include information about a part of beams for the first node. For example, the information about the candidate beam for the first node includes information about a beam within a specific angle range or geographical location range, or a subset of the maximum quantity of correspondingly configured beams.

The beam is a beam of which the angle may be within, for example, a range of 0 to 180°. A geographical location may also correspond to an angle. For example, coordinates of the second node are in a northerly direction of the first node. When the first node communicates with the second node, only a beam in an angle range of 180° from 90° north by west to 90° north by east may be selected as a candidate beam. The foregoing angle range may mean that the first node or the second node or both respectively determine to report only beam information within the range, or may mean that the coordinating node sends a related message before sending the request information or includes a limitation on the angle range of the reported beam in the request information. For example, the coordinating node may determine an angle of a specific range based on a determined direction of the third link, or for the limited angle, refer to a direction of a currently connected link.

When the first node or the second node or both report only beam information in a part of the range, reporting overheads of the first node and/or the second node can be reduced.

In the embodiment of the application, the information about the candidate beam for the first node includes at least one of an index of the candidate beam for the first node, an angle corresponding to the index of the candidate beam for the first node, and a quantity of candidate beams for the first node. The information about the candidate beam for the second node includes at least one of an index of the candidate beam for the second node, an angle corresponding to the index of the candidate beam for the second node, and a quantity of candidate beams for the second node.

In some embodiments, the information about the candidate beam for the first node may include at least one of the index of the candidate beam for the first node and the angle corresponding to the index of the candidate beam for the first node. The information about the candidate beam for the second node includes at least one of the index of the candidate beam for the second node and the angle corresponding to the index of the candidate beam for the second node.

For example, the information about the candidate beam for the first node may include only the index of the candidate beam for the first node.

For another example, the information about the candidate beam for the first node may include only the angle of the candidate beam for the first node.

For another example, the information about the candidate beam for the first node may include the index of the candidate beam for the first node and the angle corresponding to the index of the candidate beam for the first node.

For example, Table 1 shows examples of indexes of beams in a two-dimensional coordinate system and/or angles corresponding to the indexes of the beams, where Φ is a corresponding horizontal angle, that is, an included angle between a geographical north direction and a beam direction along a counterclockwise direction.

**Table 1**

| Index | 0 | 1 | 2 | 3 | 4 | 5 | 6 | 7 |
|---|---|---|---|---|---|---|---|---|
| Φ (°) | 0 | 11.25 | 22.5 | 33.75 | 45 | 56.25 | 67.5 | 78.75 |

| Index | 8 | 9 | 10 | 11 | 12 | 13 | 14 | 15 |
|---|---|---|---|---|---|---|---|---|
| Φ (°) | 90 | 101.25 | 112.5 | 123.75 | 135 | 146.25 | 157.5 | 168.75 |

As shown in Table 1, in the two-dimensional coordinate system, a 180-degree angle range may be divided into 16 equal parts, where an index of a beam of [0, 11.25°) is 0, an index of a beam of [11.25°, 22.5°) is 1, ..., and an index of a beam of [168.75°, 180°) is 15. For example, when the coordinating node finally determines that a range of a transmit/receive beam for a node is from 20° to 40°, an index of a corresponding beam may be 1, 2, or 3, and the coordinating node may further determine the transmit or receive beam for the node from the indexes of the three beams.

A correspondence between the indexes and the angles Φ of the beams in Table 1 is merely an example. In another case, there may be more or fewer beams in a same angle range because the beam is narrower or wider. For example, when a radiation range of each beam is 60°, there are three beams in a range of 180°. When the radiation range of each beam is only 5°, there are 36 beams in the range of 180°. The radiation range of the beam is determined based on factors such as antenna transmit power, a quantity of antennas, and antenna arrangement. Details are not described herein.

Table 2 shows a correspondence between directions of receive and transmit beams and indexes of the beams in a three-dimensional coordinate system, where Φ is a corresponding horizontal angle, that is, an included angle between a geographical north direction and a beam direction along a counterclockwise direction, and θ is a vertical angle that is 0 degrees in a vertical direction and is 90 degrees in a horizontal direction.

**Table 2**

| Index | 0 | 1 | 2 | 3 | 4 | 5 |
|---|---|---|---|---|---|---|
| Φ, θ (°) | (0,0) | (0, 11.25) | (11.25, 0) | (11.25, 11.25) | (11.25, 22.5) | (22.5, 11.25) |

| Index | 6 | 7 | 8 | 9 | 10 | 11 |
|---|---|---|---|---|---|---|
| Φ, 0 (°) | (22.5, 22.5) | (22.5, 33.75) | (33.75, 22.5) | (33.75, 33.75) | (33.75, 45) | (45, 33.75) |

| Index | 12 | 13 | 14 | 15 | 16 | 17 |
|---|---|---|---|---|---|---|
| Φ, θ (°) | (45, 45) | (45, 56.25) | (56.25, 45) | (56.25, 56.25) | (56.25, 67.5) | (67.5, 56.25) |

| Index | 18 | 19 | 20 | 21 | 22 | 23 |
|---|---|---|---|---|---|---|
| Φ, θ (°) | (67.5, 67.5) | (67.5, 78.25) | (78.25, 67.5) | (78.25, 78.25) | (78.25, 90) | (90, 78.25) |

Similar to Table 1, the indexes of the beams in the three-dimensional coordinate system and an angle range corresponding to the indexes of the beams in Table 2 are an example. This correspondence may also change with an actual situation.

When the information about the candidate beam is the index of the candidate beam and the angle corresponding to the index of the candidate beam, the index of the candidate beam may be understood as code for distinguishing the candidate beam, and the corresponding angle is a main coverage area of the beam.

It can be seen from the foregoing that the index of the beam or the angle corresponding to the index of the beam or both are used to distinguish between beams in all directions of a same node. Therefore, information that can be used to distinguish between the beams based on the directions or information that can convert the beams to correspond to the directions may both be used as the information about the candidate beam. Specifically, the information may include at least one of a beam number, a beam management resource number, an uplink signal resource number, a downlink signal resource number, a sidelink signal resource number, an absolute index of the beam, a relative index of the beam, a logical index of the beam, an index of an antenna port corresponding to the beam, an index of an antenna port group corresponding to the beam, an index of a downlink signal corresponding to the beam, a time index of a downlink synchronization signal block corresponding to the beam, beam pair link (beam pair link, BPL) information, a transmit parameter (Tx parameter) corresponding to the beam, a receive parameter (Rx parameter) corresponding to the beam, a transmit weight corresponding to the beam, a weight matrix corresponding to the beam, a weight vector corresponding to the beam, a receive weight corresponding to the beam, an index of the transmit weight corresponding to the beam, an index of the weight matrix corresponding to the beam, an index of the weight vector corresponding to the beam, an index of the receive weight corresponding to the beam, a receive codebook corresponding to the beam, a transmit codebook corresponding to the beam, an index of the receive codebook corresponding to the beam, and an index of the transmit codebook corresponding to the beam.

In some other embodiments, the information about the candidate beam for the first node may include a quantity of candidate beams for the first node, and the information about the candidate beam for the second node includes a quantity of candidate beams for the second node. The quantity of candidate beams is sent by the first node and/or the second node to the coordinating node.

For example, when the coordinating node is the third node, the first node and the second node send the quantities of respective candidate beams to the coordinating node.

Correspondingly, the third node receives the quantities of respective candidate beams sent by the first node and the second node.

The quantity of candidate beams for the second node is used as an example. The second node may determine the quantity of candidate beams for the second node based on location information of the first node and location information of the second node.

Specifically, the second node determines a length and a direction of a connection line between two nodes based on location information that is of a node on a peer side of a link or a target node and that is obtained from the coordinating node. The length and the direction may be calculated based on a geometric relationship. According to the obtained direction, the second node may select, from all beams for the second node, several beams with angles close to the direction of the link, to use the several beams as the candidate beams, and determine the quantity of candidate beams based on the several beams.

A process in which the first node and the second node determine the quantity of candidate beams is as follows.

Step 1: The coordinating node obtains the location information of the first node and the second node.

Step 2: The coordinating node sends the location information of the first node to the second node, and sends the location information of the second node to the first node.

Step 3: The first node determines the quantity of candidate beams for the first node based on the location information of the second node and the location information of the first node, and the second node determines the quantity of candidate beams for the second node based on the location information of the first node and the location information of the second node.

Step 4: The first node and the second node send the information about respective candidate beams to the coordinating node for subsequent processing.

For another example, when the coordinating node is the first node, the second node sends the quantity of candidate beams for the second node to the first node via the third node.

The first node sends the location information of the first node to the second node via the first link and the second link, and the second node may further send the location information of the second node to the first node via the second link and the first link, so that both the first node and the second node can learn the location information of both the first node and the second node. The second node determines the quantity of candidate beams for the second node based on the location information of the first node, and the first node determines the quantity of candidate beams for the first node based on the location information of the second node. The second node sends the quantity of candidate beams for the second node to the first node, so that the first node performs coordination in a unified manner and configures beam information.

For another example, when the coordinating node is the second node, the first node sends the quantity of candidate beams for the first node to the second node via the third node.

This case is similar to the foregoing case. A process in which the first node determines the quantity of candidate beams for the first node is not described in detail again. Finally, the first node sends the quantity of candidate beams for the first node to the second node via the third node.

In some embodiments of the application, the first information may further include at least one of first sub-information and second sub-information. The first sub-information includes a direction of the first link, a length of the first link, a direction of the second link, and a length of the second link. The second sub-information includes the location information of the first node and the location information of the second node. The first link is a link between the first node and the third node. The second link is a link between the second node and the third node.

The direction of the first link is an approximate direction of a connection line between the third node and the first node. The direction of the first link may be learned by using the transmit or receive beam for the first node or the third node. Because the beam corresponds to a specific angle, the beam corresponds to the first link. When the first node and the third node perform data transmission, a direction of a used beam is approximately the direction of the connection line between the first node and the third node.

The length of the first link is a distance between the first node and the third node, and may also be referred to as the length of the first link. The length of the second link is a distance between the second node and the third node, and may also be referred to as the length of the second link. The length of the first link may be calculated by using a time difference between signal receiving and signal sending between the third node and the first node. For example, the third node may send a reference signal to the first node, and the third node may calculate the length of the first link based on the time difference between the sending of the reference signal by the third node and the receiving of the reference signal by the first node.

In some embodiments, the coordinating node is the third node. The coordinating node may directly determine the direction of the first link based on a direction of a beam used for communication with the first node, and determine the length of the first link; and the coordinating node may determine the direction of the second link based on a direction of a beam used for communication with the second node, and determine the length of the second link, to obtain the first sub-information.

In some other embodiments, the coordinating node is the first node, and the coordinating node may directly determine the direction of the first link based on the beam used for communication with the third node, and determine the length of the first link. For the direction and the length of the second link, the link between the third node and the second node is the second link, and the third node may directly determine the direction of the second link based on the beam used for communication with the second node, and the third node determines the length of the second link. Because the nodes may be in motion, the third node may report the length of the second link to the first node through long-periodicity distance reporting and short-periodicity micro-distance update, and report the direction of the second link to the first node through long-periodicity direction reporting and short-periodicity micro-direction update, so that the coordinating node obtains the first sub-information.

A case in which the coordinating node is the second node is similar to that of the first node, and details are not described herein again.

Reporting overheads can be reduced by using such long-periodicity distance or direction reporting and micro-distance or micro-direction update.

In some embodiments, the location information of the first node and the location information of the second node may be coordinates of the first node and the second node, may be absolute coordinates, or may be relative coordinates. The location information may be coordinates in a global coordinate system (global coordinate system, GCS), or may be coordinates in a local coordinate system (local coordinate system, LCS).

In some other embodiments, the location information may be the geographical location range, for example, a coordinate range.

For example, an area range in which the three nodes are located may be divided into grids, to determine location information of the nodes.

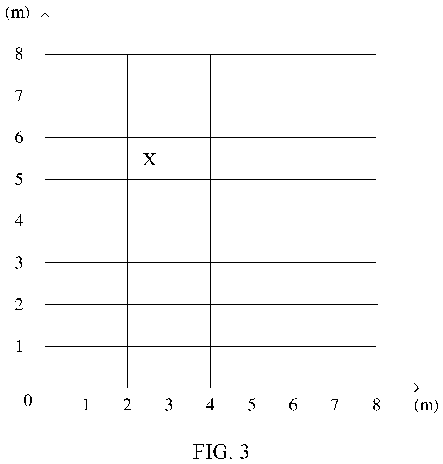

FIG. 3 is a schematic diagram of node location information in a beam configuration method according to an embodiment of the application.

As shown in FIG. 3, an area of 8 m*8 m may be divided into 64 grids of 1 m*1 m. Therefore, only a six-bit binary number is required to distinguish between the 64 grids. For example, it is specified that decimal numbers corresponding to each horizontal row increase from the left, and decimal numbers corresponding to each vertical column increase from bottom to top. In this case, coordinates of a grid point closest to a coordinate origin are (0-1, 0-1), a corresponding decimal number is 0, and a corresponding binary number is (000000). Coordinates of a grid point farthest from the origin are (7-8, 7-8), a corresponding decimal number is 63, and a corresponding binary number is (111111). For example, if coordinates of a location x are (2-3, 5-6), a corresponding decimal number is 42, and a corresponding binary number is (101010).

Alternatively, the area may be divided into another quantity of grids, for example, 32, 128, or 256 grids. This may be specifically designed according to an actual requirement. For example, if high positioning precision is required, the grids may be set to be smaller, and the fixed area includes a larger quantity of grids. If low positioning precision is required, the grids may be set to be larger, and the fixed area includes a smaller quantity of grids, so that overheads of storage and information reporting can be reduced. In other words, a grid size of a location area is related to positioning precision. Higher precision indicates smaller grids, and lower precision indicates larger grids.

The origin of the foregoing gridded coordinates may be set as desired, may be a grid in a relative coordinate system, or may be a grid in an absolute coordinate system. For example, the origin is set to be any one of the first node, the second node, or the third node. In this way, the coordinating node or each of the other nodes only needs to quantize an area within a range of the grids. Compared with a case of directly reporting coordinates of a node, in this case, overheads of location information reporting and storage can be reduced.

S220: The coordinating node determines beam information of the first node and beam information of the second node based on the first information.

The following describes S220 by using an example in which the first node is a transmit node on a third link, and the second node is a receive node on the third link. When the second node is the transmit node on the third link, and the first node is the receive node on the third link, the first node and the second node may be completely interchangeable, without affecting the technical solutions of the application.

In the embodiment of the application, information about a candidate beam for the first node includes at least one of an index of the candidate beam for the first node, an angle corresponding to the index of the candidate beam for the first node, and a quantity of candidate beams for the first node. Information about a candidate beam for the second node includes at least one of an index of the candidate beam for the second node, an angle corresponding to the index of the candidate beam for the second node, and a quantity of candidate beams for the second node.

In some embodiments, the beam information of the first node includes an index of a transmit beam for the first node and/or an angle corresponding to the index of the transmit beam for the first node, and the beam information of the second node includes an index of a receive beam for the second node and/or an angle corresponding to the index of the receive beam for the second node.

The transmit beam for the first node may be one determined transmit beam, or may be a plurality of transmit beams. There may be one or more receive beams for the second node. Because the transmit beam belongs to a subset of candidate transmit beams, and the receive beam belongs to a subset of candidate receive beams, the first node or the second node performs beam sweeping in a smaller range, so that overheads of beam sweeping of the first node and the second node are reduced, and the latency and energy consumption are reduced.

It should be understood that the index or the angle corresponding to the index or both herein are also used to distinguish between different beams for each node, and the index of the candidate beam and/or the angle corresponding to the index of the candidate beam may have an extension similar to that of the index of the beam and/or the angle corresponding to the index of the beam.

In some other embodiments, the information about the candidate beam for the first node may include the quantity of candidate beams for the first node, and the information about the candidate beam for the second node includes the quantity of candidate beams for the second node. A meaning of the quantity of candidate beams and an obtaining process have been provided in S210. For brevity, details are not described herein again.

In the embodiment of the application, the beam information of the first node includes a transmit beam sequence of the first node, and the beam information of the second node includes a receive beam sequence of the second node.

For example, a beam sequence is briefly described. For example, when there are two transmit beams and two receive beams, the transmit beams may be denoted as Tx0 and Tx1, the receive beams may be denoted as Rx0 and Rx1, and the coordinating node may determine that the transmit beam sequence is Tx0-Tx0-Tx1-Tx1, and the receive beam sequence is Rx0-Rx1-Rx0-Rx1. Therefore, when the transmit node and the receive node perform beam sweeping, four transmit-receive beam pairs are correspondingly generated and are respectively Tx0-Rx0, Tx0-Rx1, Tx1-Rx0 and Tx1-Rx1, with four beam pairing cases all included.

In the embodiment of the application, when configuring the beam sequence, the coordinating node may configure the transmit or receive beam sequence by using virtual beam indexes, such as Tx0, Tx1, Rx0, and Rx1 mentioned above, based on a quantity of beams without needing to learn information about an actual beam, for example, an angle, so that when performing beam pairing, the first node and the second node may traverse all transmit/receive beam combinations, to further select a beam pair of better quality from the combinations for data transmission.

The coordinating node determines the beam information of the first node and the beam information of the second node based on the first information.

In the embodiment of the application, the coordinating node determines the index of the transmit beam for the first node and/or the angle corresponding to the index of the transmit beam for the first node, and the index of the receive beam for the second node and/or the angle corresponding to the index of the receive beam for the second node based on the index of the candidate beam for the first node and/or the angle corresponding to the index of the candidate beam for the first node, and the index of the candidate beam for the second node and/or the angle corresponding to the index of the candidate beam for the second node.

Therefore, the coordinating node can determine the indexes of the beams for the first node and the second node and/or angles corresponding to the indexes of the beams for the first node and the second node based on the indexes of the candidate beams for the first node and the second node and/or the angles corresponding to the indexes of the candidate beams for the first node and the second node. The first node and the second node perform sweeping in a corresponding beam range. This reduces a beam sweeping range of the first node and the second node, and reduces overheads and a latency of sweeping.

In the embodiment of the application, the coordinating node determines the beam information of the first node based on the information about the candidate beam for the first node and at least one of first sub-information and second sub-information. The coordinating node determines the beam information of the second node based on the information about the candidate beam for the second node and at least one of the first sub-information and the second sub-information.

In some embodiments, the coordinating node determines the index of the transmit beam for the first node and/or the angle corresponding to the index, and the index of the receive beam for the second node and/or the angle corresponding to the index based on the index of the candidate beam for the first node and/or the angle corresponding to the index of the candidate beam for the first node, the index of the candidate beam for the second node and/or the angle corresponding to the index of the candidate beam for the second node, and the first sub-information. The first sub-information includes a length and a direction of a first link, and a length and a direction of a second link.

The coordinating node determines a direction of the third link based on the first sub-information, selects, based on the direction of the third link with reference to the indexes of the candidate beams for the first node and the second node and/or the corresponding angles, a beam with an angle close to the direction of the third link from the candidate beam for the first node as the transmit beam for the first node, and selects a beam with an angle close to the direction of the third link from the second node as the receive beam for the second node. The first node performs beam sweeping in a range of the transmit beam, and the second node performs beam sweeping in a range of the receive beam, so that the beam sweeping range of the first node and the second node is reduced, and the overheads and the latency are reduced.

The coordinating node can determine the direction and a length of the third link based on the first sub-information, that is, the direction and the length of the first link, and the direction and the length of the second link. Specifically, an included angle between the first link and the second link may be determined based on the direction of the first link and the direction of the second link, and then the length and the direction of the third link may be calculated based on the length of the first link, the length of the second link, and a geometric property of a triangle formed by the first node, the second node, and the third node.

In some other embodiments, the coordinating node determines the index of the transmit beam for the first node and/or the angle corresponding to the index, and the index of the receive beam for the second node and/or the angle corresponding to the index based on the index of the candidate beam for the first node and/or the angle corresponding to the index of the candidate beam for the first node, the index of the candidate beam for the second node and/or the angle corresponding to the index of the candidate beam for the second node, and the second sub-information. The second sub-information includes location information of the first node and location information of the second node.

In some other embodiments, the coordinating node determines the index of the transmit beam for the first node and/or the angle corresponding to the index, and the index of the receive beam for the second node and/or the angle corresponding to the index based on the index of the candidate beam for the first node and/or the angle corresponding to the index of the candidate beam for the first node, the index of the candidate beam for the second node and/or the angle corresponding to the index of the candidate beam for the second node, the second sub-information, and the first sub-information. The second sub-information includes the location information of the first node and the location information of the second node.

The embodiment is a combination of the foregoing two cases. For specific content, refer to the descriptions in the foregoing related content. For brevity, details are not described herein again.

The coordinating node determines the direction of the third link based on the second sub-information, selects, based on the direction of the third link with reference to the indexes of the candidate beams for the first node and the second node and/or the corresponding angles, the beam with an angle close to the direction of the third link from the candidate beam for the first node as the transmit beam for the first node, and selects the beam with an angle close to the direction of the third link from the second node as the receive beam for the second node. The first node performs beam sweeping in the range of the transmit beam, and the second node performs beam sweeping in the range of the receive beam, so that the beam sweeping range of the first node and the second node is reduced, and the overheads and the latency are reduced.

The coordinating node may determine the length and the direction of the third link based on the second sub-information, that is, the location information of the first node and the location information of the second node. Specifically, when the location information is coordinates, the coordinating node easily determines the length and the direction of the third link based on the coordinates of the first node, the coordinates of the second node, and a geometric relationship. When the location information is a geographical location range, the coordinating node may use a specific point, for example, a geometric center, in a geographical location range of the first node or the second node as the coordinates of the first node or the second node, and then calculate the direction and the length of the third link based on the foregoing geometric manner. Alternatively, the coordinating node may process geographical location ranges of the first node and the second node, and calculate, when one point is selected from each of the two geographical location ranges as the coordinates of each of the two nodes, an angle range and a length range of a connection line between the two nodes that may be used as a direction range and a length range of the third link. In this way, the length range and the direction range of the third link are obtained. Based on the length range and the direction range with reference to the indexes of the candidate beams for the first node and the second node and/or the angles corresponding to the indexes of the candidate beams for the first node and the second node, the beam with the angle close to the direction of the third link is selected from the candidate beam for the first node as the transmit beam for the first node, and the beam with the angle close to the direction of the third link is selected from the second node as the receive beam for the second node. The first node performs beam sweeping in the range of the transmit beam, and the second node performs beam sweeping in the range of the receive beam, so that the beam sweeping range of the first node and the second node is reduced, and the overheads and the latency are reduced.

In some other embodiments, the coordinating node determines the transmit beam sequence of the first node and the receive beam sequence of the second node based on the quantity of candidate beams for the first node and the quantity of candidate beams for the second node.

The coordinating node configures the transmit beam sequence for the first node and configures the receive beam sequence for the second node based on the quantity of candidate beams for the first node and the quantity of candidate beams for the second node, so that when the first node and the second node perform sweeping based on the beam sequences, beam alignment can be quickly performed, and an optimal beam can be selected. This reduces the latency and the overheads of beam sweeping. A process of determining the quantity of candidate beams is described in detail above. For brevity, details are not described herein again.

In some other embodiments, the coordinating node determines the transmit beam sequence of the first node and the receive beam sequence of the second node based on the index of the candidate beam for the first node and/or the angle corresponding to the index of the candidate beam for the first node, the index of the candidate beam for the second node and/or the angle corresponding to the index of the candidate beam for the second node, and the first sub-information. The first sub-information includes the length and the direction of the first link, and the length and the direction of the second link.

As described above, the coordinating node may determine the indexes of the beams for the first node and the second node and/or the angles corresponding to the indexes based on the index of the candidate beam for the first node and/or the angle corresponding to the index, the index of the candidate beam for the second node and/or the angle corresponding to the index, and the direction of the third link determined with reference to the first sub-information, to further determine the quantity of candidate beams for the first node and the quantity of candidate beams for the second node, and determine the transmit beam sequence of the first node and the receive beam sequence of the second node based on the quantities of candidate beams. Beam alignment is performed based on the beam sequences to quickly match an optimal beam pair. This reduces the latency and the overheads of beam sweeping.

In some other embodiments, the coordinating node determines the transmit beam sequence of the first node and the receive beam sequence of the second node based on the index of the candidate beam for the first node and/or the angle corresponding to the index of the candidate beam for the first node, the index of the candidate beam for the second node and/or the angle corresponding to the index of the candidate beam for the second node, and the second sub-information. The second sub-information includes the location information of the first node and the location information of the second node.

As described above, the coordinating node may determine the indexes of the beams for the first node and the second node and/or the angles corresponding to the indexes based on the index of the candidate beam for the first node and/or the angle corresponding to the index, the index of the candidate beam for the second node and/or the angle corresponding to the index, and the direction range of the third link determined with reference to the second sub-information, to further determine the quantity of candidate beams for the first node and the quantity of candidate beams for the second node, and determine the transmit beam sequence of the first node and the receive beam sequence of the second node based on the quantities of candidate beams. Beam alignment is performed based on the beam sequences to quickly match the optimal beam pair. This reduces the latency and the overheads of beam sweeping.

In some other embodiments, the coordinating node determines the transmit beam sequence of the first node and the receive beam sequence of the second node based on the index of the candidate beam for the first node and/or the angle corresponding to the index of the candidate beam for the first node, the index of the candidate beam for the second node and/or the angle corresponding to the index of the candidate beam for the second node, the first sub-information, and the second sub-information.

The embodiment is a combination of the other two of the foregoing several technical solutions, and details are not described herein again.

In some embodiments, when the information about the candidate beams includes only the indexes of the candidate beams, if the coordinating node can determine angles of corresponding beams based on the indexes, select, based on the direction of the third link determined based on the first sub-information and/or the second sub-information, the beam with the angle close to the third link from the beams corresponding to the indexes as the transmit beam for the first node or the receive beam for the second node, and then send the indexes to the first node and/or the second node, the first node and the second node perform beam sweeping by using the beams corresponding to the indexes. This reduces the beam sweeping range, and reduces the overheads and the latency of beam sweeping.

In some embodiments, the information about the candidate beams includes only the angles of the candidate beams. The coordinating node directly determines, based on the angles and the direction of the third link determined based on the first sub-information and/or the second sub-information, an angle of the transmit beam for the first node and an angle of the receive beam for the second node, so that the first node and the second node perform beam sweeping by using beams corresponding to the angles. This reduces the beam sweeping range, and reduces the overheads and the latency.

If the first node or the second node or both report indexes of beams in a specific angle range or geographic location range and/or angles corresponding to the indexes of the beams as the indexes of the candidate beams and/or the angles corresponding to the indexes of the candidate beams, the coordinating node only needs to coordinate the transmit or receive beam in a smaller quantity of beams while reporting overheads of the first node and/or the second node are reduced. This further reduces coordination overheads of the coordinating node.

In the embodiment of the application, the coordinating node may further determine, based on the length of the third link determined based on the first information and/or the second information, whether to trigger configuration of the beam information of the first node and/or the second node.

In some embodiments, the length of the third link is greater than a preset threshold. Even if corresponding beam information is configured for the first node and/or the second node, final quality of the channel may be poor and cannot meet a requirement. Therefore, a corresponding beam does not need to be configured for the first node and/or the second node.

In some other embodiments, the length of the third link is less than the preset threshold, the quality of the channel may be better, and the corresponding beam may be configured for the first node and/or the second node.

In the embodiment of the application, the coordinating node sends first indication information to the first node, where the first indication information includes the beam information of the first node; and/or the coordinating node sends second indication information to the second node, where the second indication information includes the beam information of the second node.

Correspondingly, the first node receives the first indication information from the coordinating node, and the second node receives the second indication information from the coordinating node.

After determining the beam information of the first node and/or the second node, the coordinating node may send corresponding indication information to the first node and/or the second node, to indicate the first node and/or the second node to perform sweeping by using a corresponding beam or perform sweeping based on a corresponding sequence. This reduces the latency and the overheads of beam sweeping.

Specifically, for example, when the coordinating node is the third node, the coordinating node may configure the corresponding beam information for the first node and the second node, send the first indication information including the beam information of the first node to the first node, and send the second indication information including the beam information of the second node to the second node.

When the coordinating node is the first node, the coordinating node may configure the beam information for the second node, and send the second indication information including the beam information of the second node to the second node. The coordinating node may further configure beam information for the coordinating node to communicate with the second node.

When the coordinating node is the second node, the coordinating node may configure the beam information for the first node, and send the first indication information including the beam information of the first node to the first node.

In the foregoing three cases, that the coordinating node configures the beam information for the second node and that the coordinating node sends the second indication information including the beam information of the second node to the second node are both optional. The second node may directly perform blind sweeping to communicate with the first node.

In the embodiment of the application, information exchanged between the coordinating node and the first node and/or the second node includes a lot of coordinate system-related information, for example, the angle and the location. Therefore, for the coordinating node to flexibly and effectively configure the related information, the coordinating node and the first node and/or the second node need to share the same understanding about the received coordinate system-related information.

In some embodiments, the first node or the second node or both use a same coordinate system, and the foregoing condition of the same understanding can be met, regardless of the same coordinate system being a GCS or an LCS.

In some other embodiments, the coordinating node and the first node and/or the second node use different coordinate systems, and a coordinate system conversion process needs to be performed before the beam information is determined.

For example, when a part of the nodes uses the LCS, an index or an angle of a beam needs to be sent to a node that uses the GCS for conversion and then sent to the node that uses the LCS. Alternatively, a coefficient of conversion from the LCS to the GCS is sent to the node that uses the LCS. The LCS is converted into the GCS by using the conversion coefficient, and then beam configuration is performed.

Specifically, for example, the coordinating node is the third node, and there is a to-be-established link or a link of a to-be-determined beam between the first node and the second node. The third node uses the GCS, and the first node and the second node respectively use LCS 1 and LCS2. The third node learns coordinate conversion coefficients of the first node and the second node. A coefficient of conversion used to convert LCS1 coordinates into GCS coordinates is (α1, β1, γ1), and a coefficient of conversion used to convert LCS2 coordinates into the GCS coordinates is (α2, β2, γ2). For example, the coordinate conversion coefficient may be a matrix.

The coordinating node receives a coordinate-related variable A in LCS1 used by the first node, for example, an index of a candidate beam and/or an angle corresponding to the index of the candidate beam. The coordinating node first converts the variable A into A1 in the GCS by using (α1, β1, γ1), and then performs configuration. For example, the coordinating node configures an index of a beam and/or an angle corresponding to the index of the beam by using an index of a candidate beam and/or an angle corresponding to the index of the candidate beam in the GCS, then converts the configured index of the beam and/or angle corresponding to the index of the beam in the GCS into an index of a beam and/or an angle corresponding to the index of the beam in LCS1 by using the coordinate conversion coefficient, and send the converted index and/or angle to the first node, to complete the configuration.

For the beam configuration, because the index does not change when coordinates are changed, the coordinating node converts the index of the candidate beam and/or the angle corresponding to the index of the candidate beam into the index of the candidate beam and/or the angle corresponding to the index of the candidate beam (GCS), and may send only the configured index to the first node. This avoids another coordinate conversion process.

For another example, the coordinating node is the third node, and there is a to-be-established link or a link of a to-be-determined beam between the first node and the second node. The third node uses LCS3, and the first node and the second node use the GCS.

The coordinating node receives an index of a candidate beam for the first node and/or an angle corresponding to the index of the candidate beam in the GCS. The coordinating node receives a coordinate conversion coefficient (α3, β3, γ3) sent by the first node or the second node for converting LCS3 into the GCS. The third node converts some parameters of the third node into parameters in the GCS based on the coordinate conversion coefficient, so that an index of a beam and/or an angle corresponding to the index of the beam in the GCS may be directly configured for the first node based on the index of the candidate beam for the first node and/or the angle corresponding to the index of the candidate beam in the GCS. After the configuration is completed, the configured index of the candidate beam for the first node or the configured angle corresponding to the index of the candidate beam for the first node or both in the GCS are directly sent to the first node.

The third node may also convert information about candidate beams for the first node and/or the second node in the GCS into information about the candidate beams in LCS3, configure beam information, convert the beam information into information in the GCS, and then send the information to the first node and/or the second node. The foregoing process is similar to the foregoing description, and only a coordinate conversion direction is different. Therefore, a coordinate conversion coefficient also needs to be changed correspondingly.

In the embodiment of the application, in addition to configuring the beam, the coordinating node may further obtain the second information. The second information includes candidate resource information of the first node and candidate resource information of the second node. The coordinating node determines transmission resource information of the first node and reception resource information of the second node based on the second information. The transmission resource information of the first node indicates a resource of the transmit beam for the first node, and the reception resource information of the second node indicates a resource of the receive beam for the second node.

Correspondingly, the first node and the second node report the respective candidate resource information.

In some embodiments, the first node or the second node or both actively report the respective candidate resource information, for example, through periodic reporting. In this way, the coordinating node may obtain the candidate resource information of the first node and the second node in advance, and configure a corresponding resource for a corresponding transmit or receive beam. This reduces signaling interaction overheads and reduces the latency, so that when one node performs sending, another node performs reception, to handle duplex matching and avoid a resource conflict.

In some other embodiments, the first node and/or the second node may report the candidate resource information of the first node and/or the second node in response to a request of the coordinating node.

For example, before the coordinating node obtains the second information, the coordinating node may further perform the following operations: sending third request information to the first node, where the third request information indicates the first node to report the candidate resource information of the first node; and/or sending fourth request information to the second node, where the fourth request information indicates the second node to report the candidate resource information of the second node.

For example, when the coordinating node is the first node, before obtaining the second information, the coordinating node may send the fourth request information to the second node, where the fourth request information indicates the second node to report the candidate resource information of the second node. In this case, the first node may directly obtain the candidate resource information of the first node from the first node.

For another example, when the coordinating node is the second node, before obtaining the second information, the coordinating node may send the third request information to the first node, where the third request information indicates the first node to report the candidate resource information of the first node. In this case, the second node may directly obtain the candidate resource information of the second node from the second node.

For another example, when the coordinating node is the third node, before obtaining the second information, the coordinating node may send the third request information to the first node, where the third request information indicates the first node to report the candidate resource information of the first node; and/or send the fourth request information to the second node, where the fourth request information indicates the second node to report the candidate resource information of the second node.

Correspondingly, before the first node sends the candidate resource information of the first node to the coordinating node, the first node receives the third request information of the coordinating node; and/or before the second node sends the candidate resource information of the second node to the coordinating node, the second node receives the fourth request information of the coordinating node.

Therefore, the first node or the second node or both report the respective candidate resource information in response to the requests of the coordinating node.

The foregoing request may be that the coordinating node learns that there is to-be-sent data, which triggers sending of the request information. For the first node and the second node, the request information is optional. The coordinating node sends a request message to the first node and/or the second node, so that the first node and/or the second node can report related information according to a requirement of the coordinating node. This ensures timely and effective sending of the information about the candidate beams.

The second information may be obtained together with the foregoing first information, or may be obtained separately from the first information. When the coordinating node is the third node, the coordinating node may send different request information to the first node and the second node to request for the candidate resource information, or may send the request message with same content to the first node and the second node to request for the candidate resource information of the first node and the candidate resource information of the second node, so that the first node and the second node respectively send the respective candidate resource information in response to the request message.

The candidate resource information may indicate a candidate resource of the first node or the second node, for example, a time-frequency resource or a space resource. The candidate resource may be an available resource or an idle resource of the first node or the second node, or may be a dedicated resource of the first node or the second node. The candidate resource information may include but is not limited to an index of the resource, a serial number of the resource, and the like.

The coordinating node obtains the candidate resource information of the first node and the second node, and configures resources corresponding to the foregoing beam information, to handle duplex matching and avoid a conflict between a resource used on the third link and a resource on another link connecting the first node or the second node.

It should be understood that, when the information about the candidate beams reported by the first node and/or the second node to the coordinating node is the quantities of candidate beams, and the coordinating node configures the corresponding transmit or receive beam sequence for the first node and the second node, the coordinating node can better configure the corresponding resources for the first node and the second node based on the quantities of candidate beams, that is, may configure a corresponding reception resource, transmission resource, or feedback resource for each candidate beam.

It should be further understood that a reception resource of the second node may be configured by the coordinating node, or a receive end performs blind sweeping to receive data or signaling.

In the embodiment of the application, the coordinating node performs at least one of the following operations: sending the transmission resource information of the first node to the first node; or sending the reception resource information of the second node to the second node. The transmission resource information of the first node indicates the resource of the transmit beam for the first node, and the reception resource information of the second node indicates the resource of the receive beam for the second node.

After configuring the corresponding resources for the first node and the second node, the coordinating node may send the configured resource information to the first node and the second node, to avoid the resource conflict.

In the embodiment of the application, the coordinating node may further obtain third information. The third information includes at least one of information about the distance between the first node and the second node, information about an antenna gain, on the first link, of the first node, information about an antenna gain, on the second link, of the second node, and path loss information that is of a third link and that is predicted by the coordinating node. The third link is a link that is between the first node and the second node and that is used for communication. The coordinating node determines transmit power of the first node based on the third information.

Correspondingly, the first node sends the information about the antenna gain, on the first link, of the first node to the coordinating node, and/or the second node sends the information about the antenna gain, on the second link, of the second node to the coordinating node, to determine transmit power, on the third link, of the first node.

The information, obtained from the first node and/or the second node, in the third information may be obtained together with the foregoing first information and second information in a same manner. The process is not described again.

Specifically, the coordinating node determines the transmit power on the third link based on the length of the third link, a prediction of the coordinating node about the path loss information of the third link, and a transmit or receive antenna gain, on the third link, of the first node and/or the second node.

In the embodiment of the application, when the coordinating node is the second node or the third node, the coordinating node sends transmit power information of the first node to the first node. The transmit power information of the first node indicates the transmit power of the first node.

Correspondingly, the first node receives the transmit power information from the coordinating node, and performs data transmission based on the corresponding power.

After configuring the transmit power of the first node based on the third information, the coordinating node may send the transmit power information to the first node, so that the first node can send data to the second node based on the appropriate power.

When the transmit power is excessively high, another normal communication link may be interfered. When the transmit power is low, the transmit power may need to be further increased during data transmission.

When the coordinating node is the first node, the coordinating node configures transmit power for the coordinating node, to send the data to the second node based on the appropriate power.

In the embodiment of the application, the coordinating node may further determine feedback resource information of the second node. The feedback resource information of the second node indicates a feedback resource of the second node. The feedback resource is used to feed back, to the coordinating node, at least one of a status of beam pairing between the first node and the second node, a status of data transmission between the first node and the second node, and quality of a channel between the first node and the second node.

In the embodiment of the application, the feedback resource information of the second node may be determined based on fourth information obtained by the coordinating node. The fourth information includes at least one of candidate resource information of the second node, the resource of the receive beam for the second node, and receive beam information of the second node.

Correspondingly, the second node sends the fourth information to the coordinating node for the coordinating node to determine the feedback resource information of the second node. The feedback resource information of the second node indicates the feedback resource of the second node. The feedback resource is used to feed back, to the coordinating node, at least one of the status of beam pairing between the first node and the second node, the status of data transmission between the first node and the second node, and the quality of the channel between the first node and the second node.

The coordinating node may send the feedback resource information to indicate the feedback resource to the second node, or the feedback resource may be determined by the second node through predefinition or pre-configuration. For example, feedback resources for each receive or transmit beam and a measurement feedback corresponding to each receive or transmit beam are preconfigured.

Feedback information sent by the second node may further include an index of a beam or an index of a beam pair. When more than one beam or beam pair is fed back, feedback is performed for different beams or beam pairs, so that the coordinating node can match the feedback information and the beam or beam pair.

It should be understood that when the coordinating node is the second node herein, the second node may obtain the fourth information from the second node, and no sending process is required.

A manner of transmitting the fourth information may be similar to the foregoing manner of transmitting the first, second, and third information, or the fourth information may be combined with other information for transmission. Details are not described herein again.

For the feedback on the status of beam pairing, for example, when an ACK/NACK is used as the feedback on the status of beam pairing to the coordinating node, the feedback may be performed for one beam or one beam pair, or feedback may be performed for a plurality of beams separately. For example, a transmit beam is Tx0, and receive beams are respectively Rx0, Rx1, and Rx2. The receive node on the third link may separately perform feedback for Tx0-Rx0, Tx0-Rx1, and Tx0-Rx2. In this case, feedback content may include a status of beam pairing and a corresponding index of a beam pair. When one receive beam corresponds to only one transmit beam, the feedback content may include only an index of the receive beam, so that the coordinating node can learn a pairing condition corresponding to each beam pair. The index may alternatively be another parameter that can distinguish between the beams.

When a pair of transmit/receive beams fails to be paired, the coordinating node can receive a NACK feedback on the beam, and a node on the to-be-established link may reselect a beam pair from other beam pairs paired by the coordinating node, determine the beam pair as a beam pair on the third link, and perform feedback for the new beam pair on the link. If the coordinating node configures only one pair of receive and transmit beams, a received NACK feedback may further trigger the coordinating node to perform beam reconfiguration for the first node and/or the second node.

The status of data transmission on the third link may also be fed back by using the ACK/NACK.

For the feedback on the quality of the channel on the third link, the first node or the second node may use the transmit or receive beam configured by the coordinating node to perform transmission based on corresponding transmit power.

In some embodiments, a reference signal or a pilot signal may be transmitted first, and then parameters that describe quality of a channel, such as reference signal received power (reference signal received power, RSRP) and a signal to interference plus noise ratio (signal to interference plus noise ratio, SINR), are fed back to the coordinating node.

In some other embodiments, for a latency-sensitive service, when the coordinating node sends, to a corresponding node, a transmit/receive beam configured for the node on the to-be-established link, data that needs to be transmitted may be simultaneously transmitted on the beam. Compared with a common service, the foregoing manner needs the first node or the second node to feed back the status of pairing and quality a channel for a pilot signal first and then perform a data transmission process, and can greatly reduce time for data transmission. After the data transmission is completed, the first node or the second node may directly perform feedback for the data, and feed back an ACK/NACK and the quality of the channel. If the coordinating node receives a NACK feedback on the data, retransmission of the data is triggered.

Before the first node or the second node feeds back a beam pairing result and quality of a channel to the coordinating node, the coordinating node may further determine, based on an available resource, a data transmission/reception resource, and a transmission/reception control resource of a node on a newly established link, a resource of the first node or the second node for feeding back the beam pairing result and the quality of the channel. The first node or the second node may feed back to the coordinating node on the corresponding resource.

In the embodiment of the application, when the coordinating node determines the transmit beam sequence and the receive beam sequence that are on the third link, the first node and the second node may perform beam sweeping based on an indication of the coordinating node, and then select a beam pair with high communication quality for data transmission. Therefore, the foregoing transmit power, feedback resource, feedback content, resource of the transmit beam, and resource of the receive beam that are configured by the coordinating node are also applicable to this case.

In the embodiment of the application, the coordinating node performs at least one of the following operations: The coordinating node sends the first indication information to the first node, where the first indication information includes the beam information of the first node; or the coordinating node sends the second indication information to the second node, where the second indication information includes the beam information of the second node.

It may be understood that the coordinating node may send the beam information, the resource information, the feedback resource information, and the transmit power information that are configured for the first node and/or the second node in a same piece of signaling. For example, the beam information, the resource information, the feedback resource information, and the transmit power information may be included in the foregoing first indication information and/or second indication information, or may be transmitted separately. A form of sending the information is not limited in the application.

Manners of data transmission on the first link, the second link, and the third link are not limited in the foregoing embodiment. For transmission of specific data, a system formed by the first node, the second node, and the third node may include a source node, a relay node, and a sink node. For a source node-relay node link, the source node is a data transmission node, and the relay node is a data reception node. For a relay node-sink node link, the relay node is the data transmission node, and the sink node is the data reception node. For a source node-sink node link, the source node is the data transmission node, and the sink node is the data reception node.

The coordinating node may be any one of the source node, the relay node, and the sink node.

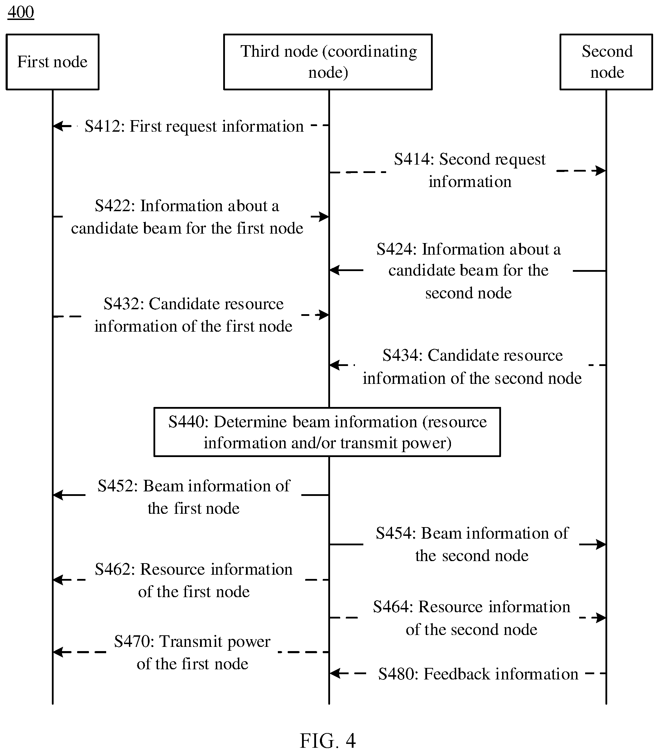

FIG. 4 is a schematic flowchart of a beam configuration method according to an embodiment of the application.

In a method 400, it is determined that a coordinating node is a third node. An example in which a first node is a transmit node on a third link is used to describe the technical solution corresponding to FIG. 2 from a perspective of signaling interaction. A case in which a second node is the transmit node on the third link is similar. The method 400 includes the following steps.

S422: The first node sends information about a candidate beam for the first node to the third node.

S424: The second node sends information about a candidate beam for the second node to the third node.

The first node sends the information about the candidate beam for the first node to the third node via a first link, and the second node sends the information about the candidate beam for the second node to the third node via a second link. Correspondingly, the third node may obtain the information about the candidate beam for the first node via the first link, and obtain the information about the candidate beam for the second node via the second link.

The information about the candidate beam may be an index of the candidate beam and/or an angle corresponding to the index of the candidate beam, or may be another parameter described above that can identify the specific beam, or may be a quantity of candidate beams.

S440: The third node determines beam information of the first node and/or the second node. The beam information of the first node may be an index of a transmit beam for the first node and/or an angle corresponding to the index of the transmit beam for the first node or the another parameter that can identify the specific beam, or may be a transmit beam sequence of the first node.

The beam information of the second node may be an index of a receive beam for the second node and/or an angle corresponding to the index of the receive beam for the second node or the another parameter that can identify the specific beam, or may be a receive beam sequence of the second node.

When the information about the candidate beam is an index of a beam and/or an angle corresponding to the index of the beam, the coordinating node may determine transmit beam information of the first node and receive beam information of the second node from the candidate beams.

When the information about the candidate beam is the quantity of candidate beams, the coordinating node may determine beam sequences of the first node and the second node.

When the information about the candidate beam is the index of the beam and/or the angle corresponding to the index of the beam, the information about the candidate beam may further include first sub-information and/or second sub-information.

The first sub-information includes a direction of the first link, a length of the first link, a direction of the second link, and a length of the second link. The second sub-information includes location information of the first node and location information of the second node.

As described above, the coordinating node may determine the beam information or the beam sequence based on the information about the candidate beam and the first sub-information, or determine the beam information or the beam sequence based on the information about the candidate beam and the second sub-information.

A process in which the coordinating node determines the beam information or the beam sequence is described in detail above, and details are not described herein again.

In the embodiment of the application, information exchanged between the coordinating node and the first node and/or the second node includes a lot of coordinate system-related information, for example, the angle and the location. Therefore, for the coordinating node to flexibly and effectively configure the related information, the coordinating node and the first node and/or the second node need to share the same understanding about the received coordinate system-related information.

When the first node or the second node or both use a same coordinate system, the foregoing condition of the same understanding can be met, regardless of the same coordinate system being a GCS or an LCS.

When the coordinating node and the first node and/or the second node use different coordinate systems, a coordinate system conversion process needs to be performed before the beam information is determined.

In the embodiment of the application, before the first node and the second node send the information about the candidate beams to the third node, the third node may further send first request information to the first node via the first link and/or send second request information to the second node via the second link, to request for the information about the candidate beams for the two nodes.

S412: The third node sends the first request information to the first node.

S414: The third node sends the second request information to the second node.

Functions of the two nodes are equivalent. Therefore, a sequence of the messages is not limited, and the messages may be sent simultaneously.

The first request information is used to request for the information about the candidate beam for the first node, and the second request information is used to request for the information about the candidate beam for the second node.

S432: The first node sends candidate resource information of the first node to the third node.

S434: The second node sends candidate resource information of the second node to the third node.

The candidate resource information may be information about a time-frequency resource, for example, an index of the time-frequency resource, and the time-frequency resource is used to transmit beams configured by the third node for the first node and the second node.

In some embodiments, the candidate resource information may be sent based on a request of the third node. For example, the third node separately sends third request information and fourth request information to the first node.

The third node may alternatively include, in the first request information and the second request information, the requests for the candidate resource information of the first node and the second node.

In some other embodiments, the first node and the second node actively report the respective candidate resource information to the third node, for example, may periodically report the candidate resource information to the third node.

The third node may determine, based on the candidate resource information of the first node and the second node, a resource corresponding to the transmit or receive beam for the first node or the second node. A feedback resource of the second node is used to feed back a link condition, such as a status of beam pairing and quality of a channel.

S452: The third node sends the beam information of the first node to the first node.

S454: The third node sends the beam information of the second node to the second node.

After the third node determines the beam information in step S440, the third node may send the beam information of the first node to the first node via the first link, and send the beam information of the second node to the second node via the second link.

Therefore, the first node and the second node may perform data transmission or further perform beam sweeping by using the received beam information sent by the third node, that is, using beams or beam sequences indicated by the corresponding beam information.

S462: The third node sends resource information of the first node to the first node.

S464: The third node sends resource information of the second node to the second node.

S470: The third node sends transmit power of the first node to the first node.

When the beam information is the index of the beam and/or the angle corresponding to the index of the beam, the resource information of the first node and the second node is resources of beams corresponding to communication beam information that is finally determined by the first node and the second node from the beam information. When the beam information is the beam sequences, the resource information of the first node and the second node is resources corresponding to communication beam pairs that are finally determined after the first node and the second node perform sweeping based on the corresponding beam sequences. When the first node communicates with the second node, to enable one node to send and the other node to receive, the resources of the first node and the second node may be same time-frequency resources.

The first node may further send information about an antenna gain, on the first link, of the first node to the third node via the first link, and the second node may also send information about an antenna gain, on the second link, of the second node to the third node via the second link. The third node may further predict a path loss condition of the third link, determine the transmit power of the first node with reference to a distance between the first node and the second node, and send the transmit power to the first node.

S480: The second node sends feedback information to the third node.

Content of the feedback information from the second node to the third node may be determined by the third node, and includes but is not limited to a status of beam pairing, a status of data transmission, quality of a channel, and the like.

FIG. 4 shows only a case in which the coordinating node is the third node. When the coordinating node is the first node or the second node, for example, when the coordinating node is the first node, for transmission of the foregoing various pieces of information, the first node needs to learn only the information about the candidate beam for the second node and the candidate resource information of the second node.

For reporting of the first sub-information and the second sub-information, long-periodicity reporting and dynamic micro-update may be used, to reduce reporting overheads.

In addition, because there is no direct link between the first node and the second node, the first node needs to obtain related information of the second node through relay forwarding of the third node, to complete an entire process.

If the nodes in FIG. 4 use different coordinate systems, the steps of coordinate conversion are required as described above in a process of transmitting the related information. For related content, refer to the foregoing descriptions. For brevity, details are not described herein.

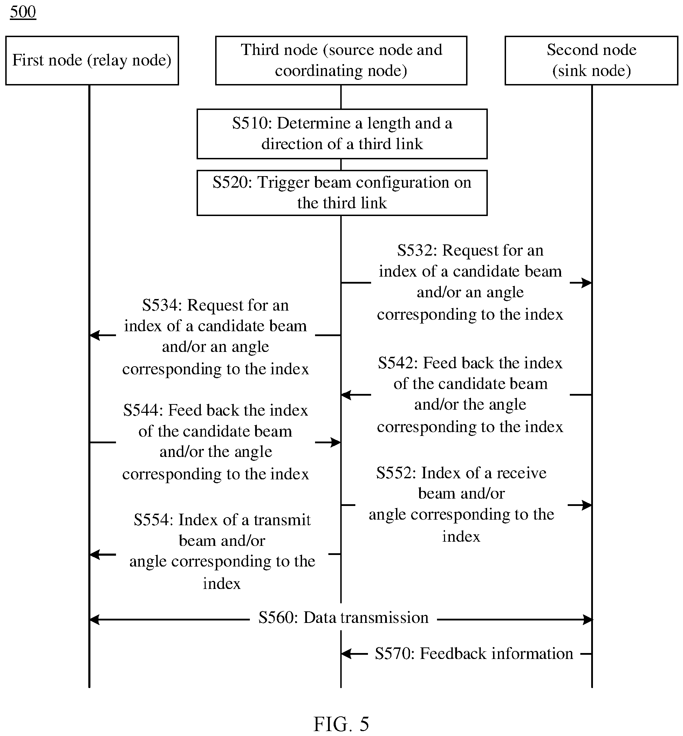

It should be understood that in the method flowchart in FIG. 4 and in subsequent method flowcharts in FIG. 5 to FIG. 12, reference numerals of steps do not mean a limitation on an execution sequence. The steps may be directly performed based on internal logic, and are not limited to being performed based on the sequence indicated by the reference numbers in the flowcharts of the application.

To further understand the technical solutions of the application, the following describes the technical solutions of the application in detail with reference to FIG. 5 to FIG. 10 by using specific embodiments.

FIG. 5 is a schematic flowchart of a beam configuration method according to an embodiment of the application.

A link between a third node and a second node is a second link, and at the same time, there is an established first link between the third node and a first node. As the second node moves, the second node moves to a signal coverage area of the first node, and the third node may trigger, based on locations of the first node and the second node and a received ultra-reliable and low latency communication (ultra-reliable and low latency communication, URLLC) service, the first node and the second node to establish a link, to improve fast auxiliary transmission for the latency-sensitive service data and improve reliability.

In a method 500, the third node may be a source node and also a coordinating node. The second node may be a sink node. The first node may be a relay node. A link between the source node and the relay node is the first link. A link between the source node and the sink node is the second link. There is a to-be-established third link or a third link of a to-be-determined beam between the relay node and the sink node.

In the technical solution of the method 500, the source node obtains indexes of candidate beams for the relay node and the sink node and/or an angle corresponding to the index of the candidate beam for the sink node to configure indexes and/or angles of transmit and receive beams for the relay node and the sink node. This reduces a beam sweeping range when the relay node communicates with the sink node, and reduces overheads and a latency.

S510: The source node determines a length and a direction of the third link.

In the embodiment of the application, the direction may be an included angle between the link and, for example, due north in a specific coordinate system. Alternatively, an included angle between two links may be determined based on directions of the two links, and then included angles between the to-be-established link or the link of the to-be-determined beam and the two links can be determined with reference to a distance between the two links, to further obtain a direction of the to-be-established link (or a direction of the beam).

Alternatively, the source node may obtain the direction of the third link based on location information of the relay node and the sink node. The location information may be relative coordinates or absolute coordinates, and the direction of the third link may be obtained based on a geometric relationship.

S520: The source node triggers beam configuration on the third link.

In S520, the source node determines, based on that the length of the third link is less than a preset threshold, to trigger the beam configuration on the third link.

S532: The source node requests the sink node for the index of the candidate beam and/or the angle corresponding to the index of the candidate beam.

S534: The source node requests the relay node for the index of the candidate beam and/or the angle corresponding to the index of the candidate beam.

In S532 and S534, the source node may further request the sink node and the relay node for candidate resource information. The candidate resource information includes available time-frequency resources of the relay node and the sink node, and the like.

Specifically, because a function of the relay node in data transmission of the third link is for sending, the index of the candidate beam for the relay node or the angle corresponding to the index of the candidate beam or both that are requested by the source node are used by the relay node to send data to the sink node, and the index of the candidate beam for the sink node or the angle corresponding to the index of the candidate beam for the sink node or both are used by the sink node to receive the data from the relay node.

The source node may request for only an index of a candidate beam for the sink node or the relay node in a specific angle range or geographical location range and/or an angle corresponding to the index of the candidate beam, to reduce reporting overheads of the two nodes and coordination overheads of the source node.

S532 and S534 are optional steps. In other words, the step in which the source node serves as the coordinating node to request for the indexes of the candidate beams and/or the angles corresponding to the indexes of the candidate beams does not necessarily exist. The relay node and the sink node may periodically report the indexes of the candidate beams and/or the angles corresponding to the indexes of the candidate beams to the source node, to reduce overheads and a latency of the source node for sending a request message. Alternatively, the source node may request the relay node and the sink node for the indexes of the candidate beams and/or the angles corresponding to the indexes of the candidate beams in advance, to reduce the latency. In this way, when latency-sensitive data needs to be transmitted, the source node, serving as the coordinating node, may directly perform beam configuration based on an already reported beam configuration parameter, and does not need to perform a process of reporting related information. This reduces the latency and improves data transmission efficiency.

S542: The sink node feeds back the index of the candidate beam and/or the angle corresponding to the index of the candidate beam to the source node.

S544: The relay node feeds back the index of the candidate beam and/or the angle corresponding to the index of the candidate beam to the source node.

In S542 and S544, the feedbacks in the steps are respectively feedbacks on the requests in S532 and S534.

S552: The source node sends the index of the receive beam for the sink node and/or the angle corresponding to the index of the receive beam for the sink node to the sink node.

S554: The source node sends the index of the transmit beam for the relay node and/or the angle corresponding to the index of the transmit beam for the relay node to the relay node.

S560: The relay node and the sink node perform data transmission.

S570: The sink node sends feedback information to the source node.

The feedback information may include an ACK/NACK feedback on beam pairing, to feed back whether beam pairing is successful, may further include an ACK/NACK feedback on data transmission, to feed back whether data transmission is successful, and may further include a feedback on a parameter that describes quality of a channel. When only one pair of transmit/receive beams is configured by the source node, and a NACK feedback is received or a signal-to-noise ratio is lower than a specific threshold, the source node may be triggered to perform beam reconfiguration.

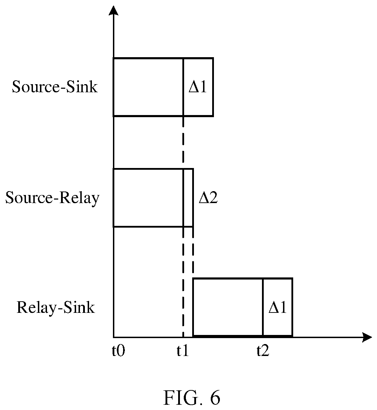

FIG. 6 is a schematic diagram of a latency corresponding to the method shown in FIG. 5.

FIG. 6 further describes, in a time sequence, a process in which the source node serves as the coordinating node to assist in establishing the third link and performs data transmission via a source-sink link and a source-relay-sink link in the scenario shown in FIG. 5.

As shown in FIG. 6, at moments t0 to 11, the source node transmits data and configuration information to both the relay node and the sink node. The configuration information includes a transmit/receive beam on the third link, a transmission/reception resource corresponding to the transmit/receive beam, transmit power, a feedback resource, and the like.

It should be understood that, because the coordinating node is the source node, and the source node can learn of specific time at which the data needs to be sent, before this, the receive or transmit beam corresponding to the third link and a time-frequency resource, the transmit power, and the feedback resource that correspond to the receive or transmit beam are already configured based on statuses of the first link and the second link, the information about the candidate beams for the relay node and the sink node, the candidate resource information of the relay node and the sink node, so that when the data needs to be transmitted, the data and the configuration information are directly sent to the relay node and the sink node, that is, within a time period from t0 to t1.

For the source-sink link, the sink node receives the beam configuration information and the data and performs processing, including physical-layer processing and higher-layer processing. Processing time is a time period Δ1. In the time period Δ1 on the link, the sink node has determined a receive beam on the relay node-sink node link based on the configuration of the source node, so that the data is directly received on the subsequent relay node-sink node link for processing.

For the source-relay-sink link, the relay node receives the beam configuration information and the data from the source node and performs light processing within a time period Δ2 shown in the figure.

After the light processing, the relay node may forward the data to the sink node. A forwarding manner may be decoding forwarding, demodulation forwarding, soft forwarding, or even only amplification forwarding. The forwarding is performed on a configured corresponding beam. A resource used for the forwarding may be configured by the source node, and selection of the forwarding manner may also be configured by the coordinating node. A time period for the forwarding step is t1+Δ2-t2.

After receiving the data, the sink node may perform processing, including physical-layer processing and higher-layer processing, on the data in a same manner as the processing on the source node-sink node link, and time for the processing is also Δ1.

It can be seen from the latency diagram that for two transmission paths of data transmission: the source-sink link and the source-relay-sink link, the source node assists in fast establishment of a link between the relay node and the sink node, so that when data is transmitted to the sink node via the relay node, the latency is low. This ensures reliable transmission of latency-sensitive data.

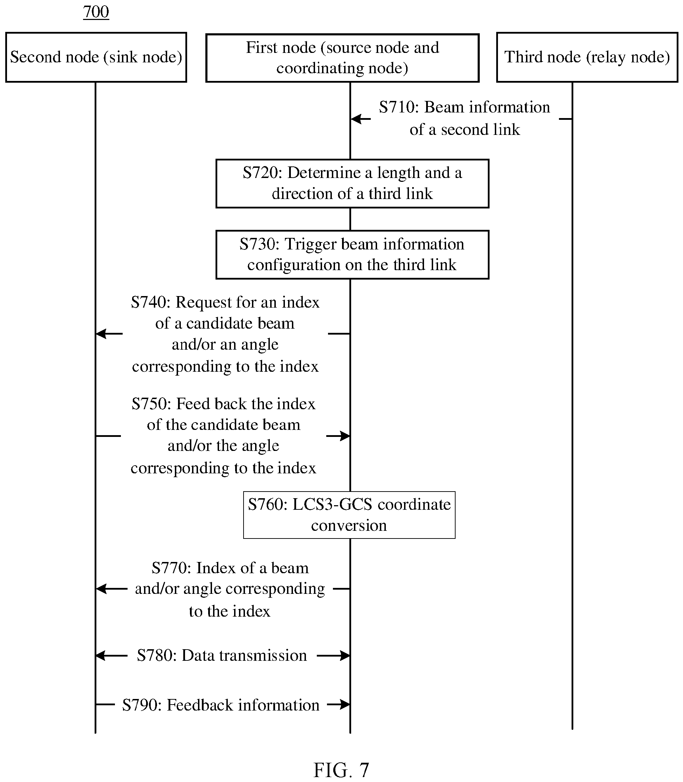

It may be understood that, the latency diagram shown in FIG. 6 is specific to a process in which the source node assists the relay-sink link in determining the beam information and performing data transmission. When the coordinating node is another node, or the first node and the second node have other functions, for example, as shown in scenarios in FIG. 7, FIG. 8, FIG. 10, and FIG. 12 or in other embodiments that are not shown, the coordinating node assists the first node and/or the second node in configuring the beam information or other configuration information, and similar effect of reducing a latency can also be achieved. Specifically, this may be obtained through analysis with reference to other embodiments. For brevity, details are not described herein again.

FIG. 7 is a schematic flowchart of another beam configuration method according to an embodiment of the application.

In a method 700, a first node may be a source node and also a coordinating node. A third node is a relay node. A second node is a sink node. A link between the source node and the relay node is a first link. A link between the relay node and the sink node is a second link. There is a to-be-established third link or a third link of a to-be-determined beam between the source node and the sink node. The source node uses a GCS. The relay node and the sink node use LCS3 and LCS2 respectively.

Different from the method 500, three nodes in the embodiment corresponding to the method 700 use different coordinate systems, and a process of coordinate system conversion needs to be performed. In addition, because there is no direct link between the source node and the sink node, a part of information of the sink node needs to be forwarded to the source node via the relay node.

S710: The relay node sends beam information of the second link to the source node.

In S710, the relay node dynamically or semi-statically sends an angle corresponding to an index of a transmit beam for the relay node on the second link and a length of the second link to the source node. To reduce overheads of the relay node, reporting of the length may include long-periodicity length reporting and dynamic length micro-update.

S720: The source node determines a length and a direction of the third link.

Because the source node already learns of a direction of a transmit beam for the source node on the first link, that is, a direction of the first link, the source node easily obtains a length of the first link, and the source node can also learn of a direction and the length of the second link via the relay node. In other words, the source node can determine the direction of the third link (or a direction of a beam) and the length of the third link based on a geometric relationship.

The source node may also obtain location information of the sink node via the relay node, to obtain the direction and the length of the third link.

S730: The source node triggers beam configuration on the third link.

The source node determines that a third distance is less than a threshold, and triggers the beam configuration.

S740: The source node requests the sink node for an index of a candidate beam and/or an angle corresponding to the index of the candidate beam via the relay node.

In S740, because the third link is not established, the source node and the sink node do not have a direct information transmission channel, and information needs to be transmitted via the relay node.

Similarly to the method 500, the step for requesting does not necessarily exist. When a latency-sensitive service such as a URLLC service is transmitted, the sink node may periodically report the index of the candidate beam and/or the angle corresponding to the index of the candidate beam to the source node via the relay node, to reduce overheads and a latency of the source node for sending a request message; or the source node may request the sink node for the index of the candidate beam and/or the angle corresponding to the index of the candidate beam via the relay node in advance, to reduce the latency.

S750: The sink node feeds back the index of the candidate beam and/or the angle corresponding to the index of the candidate beam to the source node via the relay node.

In S750, a message that is fed back includes the index of the candidate beam and/or the angle corresponding to the index of the candidate beam.

If the source node may request for only an index of a candidate beam in a specific angle range and/or an angle corresponding to the index of the candidate beam in S740, the sink node feeds back the index of the candidate beam in the corresponding angle range and/or the angle corresponding to the index of the candidate beam according to a requirement of the source node. This reduces reporting overheads of the sink node and coordination overheads of the source node.

Because both the relay node and the sink node use a local coordinate system, the sink node sends a set of an index of a beam for the sink node and an angle corresponding to the index in the local coordinate system LCS3 to the source node via the relay node.

S760: The source node performs LCS3-GCS coordinate conversion.

In S760, the source node receives the set of the index of the beam and/or the angle corresponding to the index of the beam. The source node may reserve the index of the beam, convert the angle in LCS3 into an angle in the GCS, select, based on the angle of the beam, beams with angles close to the direction of the third link as several receive beams for the sink node, and then send indexes corresponding to the selected beams to the sink node. In a specific embodiment of the application, coordinate conversion may be performed by using a tool such as a matrix.

The source node further configures, for the source node, a transmit beam used to communicate with the sink node.

S770: The source node sends the index of the beam and/or the corresponding angle of the beam to the sink node via the relay node.

Sending transmit or receive beam configuration information to the sink node may be sending the index of the beam or the angle corresponding to the index in LCS3 to the sink node. To be specific, the source node may convert configured beam information in the GCS into beam information in LCS3, and then send the beam information to the sink node.

Alternatively, in a specific case, because the source node has converted the beam information of the sink node in LCS3 into the beam information in the GCS in S770, transmit/receive beams for the source node and the sink node can be configured based on a length and a direction of a source node-sink node link. After the receive beam for the sink node is finally determined, only an index of a beam with a corresponding angle needs to be sent to the sink node to complete beam configuration.

The source node may alternatively configure a sequence of receive and transmit beams for the third link based on the beam configured for the sink node and the transmit beam used by the source node.

In addition, for the third link, the source node may further configure, for the third link, a time-frequency resource, transmit power, and a feedback resource that correspond to the transmit or receive beam.

S780: The source node and the sink node perform data transmission.

The source node uses the configured transmit power to send data on a transmission resource by using the transmit beam corresponding to an index of the transmit beam, and the sink node receives the data on a corresponding reception resource by using the receive beam corresponding to an index of the receive beam. When there is more than one transmit beam or receive beam, the relay node and the sink node may perform data transmission by using the more than one beam, where for example, one transmit beam corresponds to a plurality of receive beams, a plurality of transmit beams correspond to one receive beam, or a plurality of transmit beams correspond to a plurality of receive beams; or a better beam pairing solution may be selected from the configured transmit/receive beams according to a specific standard.

S790: The sink node sends feedback information to the source node.

The sink node may perform feedback for the newly established third link on a feedback resource, that is, feed back, on a pairing status feedback resource, whether beam pairing is successful, for example, feed back an ACK/NACK, and feed back, on a measurement feedback resource, quality of a channel on the third link, such as reference signal received power and a signal-to-noise ratio.

The feedback may be a feedback on a reference signal. When more than one pair of transmit/receive beams is configured by the source node, where for example, one transmit beam corresponds to a plurality of receive beams, the sink node may separately feed back the plurality of receive beams, and may then select one or more receive beams with good channel quality for data transmission. The sink node may alternatively directly feed back on to-be-transmitted data.

When only one pair of transmit/receive beams is configured by the source node, and a NACK feedback is received or the signal-to-noise ratio is lower than a specific threshold, the source node may be triggered to perform beam reconfiguration.

FIG. 7 shows a process in which the source node assists a source-sink link in determining the beam information and performing data transmission. In FIG. 7, the coordinating node and the sink node that needs to be configured by the coordinating node use different coordinate systems, that is, when the coordinating node uses the GCS, and the sink node uses LCS2, the coordinating node uniformly converts information of the sink node into information in the GCS, then performs configuration, and sends beam information that is converted back to LCS2 to the sink node.

In some embodiments, the source node may also convert a coordinate system of the source node into a coordinate system of LCS2, and then configure the beam information, to directly send the beam information in LCS2 to the sink node.

In addition, when the source node uses the LCS, and the sink node uses the GCS, the beam information or other information may also be configured based on a similar coordinate conversion process. In addition to a scenario in FIG. 7, similar coordinate conversion may also be performed in scenarios such as those in FIG. 5, FIG. 6, FIG. 8, FIG. 10, and FIG. 12 shown in embodiments of the application or other scenarios that are not shown in the application but can use the technical solutions of the application, to configure the beam information or the other information.

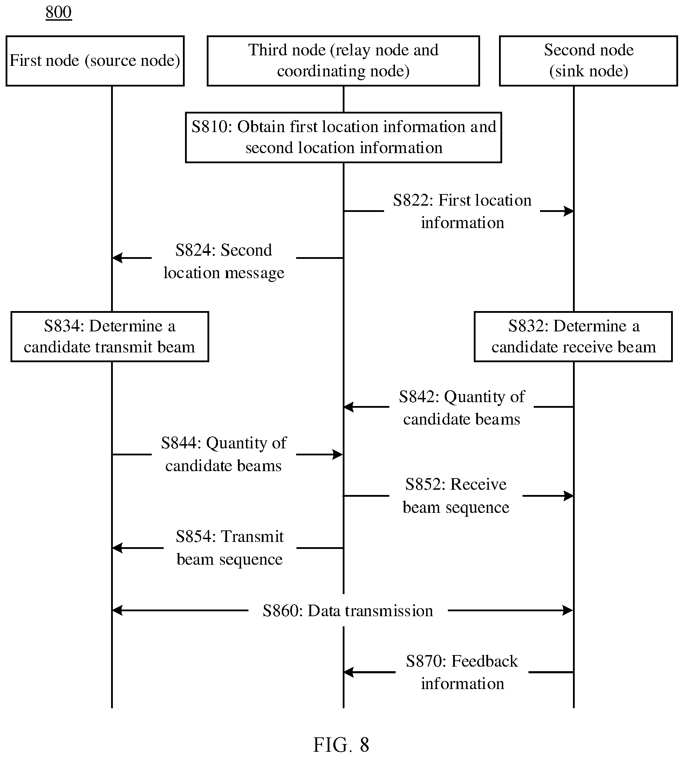

FIG. 8 is a schematic flowchart of a further beam configuration method according to an embodiment of the application.

FIG. 8 is a schematic flowchart of a beam configuration method 800 according to another specific embodiment of the application.

In the method 800, a third node is a relay node and also a coordinating node. A first node is a source node. A second node is a sink node. A link between the source node and the relay node is a first link. A link between the relay node and the sink node is a second link. There is a to-be-established third link between the source node and the sink node.

Different from the method 500 and the method 700 in which the coordinating node obtains an index of a candidate beam and/or an angle corresponding to the index of the candidate beam, and configures an index of a transmit or receive beam and/or an angle corresponding to the index of the transmit or receive beam, in the method 800, the coordinating node obtains a quantity of candidate beams, to configure a transmit or receive beam sequence. This reduces overheads and a latency of beam sweeping.

S810: The relay node obtains first location information of the source node and second location information of the sink node.

In S810, the relay node may obtain location information of the source node and the sink node obtained based on information about established links between the relay node and the two nodes. The location information may be represented in a form of coordinates, may be absolute location information, or may be relative location information. To further reduce overheads, the method 800 may be implemented by establishing a gridded coordinate system in an area range in which a system formed by the three nodes is located. The coordinate system may be established based on a global coordinate system, or may be established based on a local coordinate system shared by the three nodes. Compared with using an absolute location, using a relative location of grids of an area may only need to quantize an area within a range of the grids. This reduces overheads of storing related information and sending a message by a node.

S820: The relay node sends the first location information to the sink node, and sends the second location information to the source node.

S832: The sink node determines a candidate receive beam used by the sink node for the third link.

S834: The source node determines a candidate transmit beam used by the source node for the third link.

The source node can determine a direction of the third link based on to the location information of the source node and the location information of the sink node, to determine several candidate beams.

The sink node can determine the direction of the third link based on the location information of the sink node and the location information of the source node, to determine several candidate beams.

S842: The sink node sends the quantity of candidate beams for the sink node to the relay node.

S844: The source node sends the quantity of candidate beams for the source node to the relay node.

In S842 and S844, the quantities of candidate beams may be sent based on a request of the relay node. The source node and the sink node may send determined quantities of candidate beams to the relay node. The quantity of candidate beams for the source node is determined by the source node based on locations of the source node and the sink node. Quantity information of candidate beams for the sink node is determined by the node based on the locations of the sink node and the source node.

The relay node may further configure other information for the source node and the sink node. The other information may include a transmission resource and transmit power of the source node, a reception resource, a feedback resource, feedback content, and the like of the sink node.

S852: The relay node sends a receive beam sequence of the sink node to the sink node.

S854: The relay node sends a transmit beam sequence of the source node to the source node.

The relay node may further send the other information configured for the two nodes on the third link to the two nodes.

In S852 and S852, the relay node may configure the transmit and receive beam sequences for the source node and the sink node based on the quantity of candidate beams for the source node and the quantity of candidate beams for the sink node. Therefore, the source node and the sink node may poll beams of each other, and may select a beam pair with high transmission quality by traversing beam combinations.

S860: The source node and the sink node perform data transmission.

After selecting the beam pair with high communication quality, the source node and the sink node may perform data transmission.

S870: The sink node sends feedback information to the relay node.

A specific feedback manner and content are as described in the foregoing embodiments. If the relay node receives a feedback NACK, the source node and the sink node may be triggered to reconfigure a transmit/receive beam, and the relay node reconfigures another related resource.

In the method 800, a node on the third link determines a corresponding candidate beam by the node itself, and the coordinating node may configure other resources such as transmit power, reception and transmission resources, and a feedback resource. Actually, other configurations such as the transmit power, the reception and transmission resources, and the feedback resource may also be configured by the node on the third link itself. In this way, the coordinating node may only assist in a process of information transmission of the source node and the sink node, to facilitate an exchange of candidate resource information and other information of the source node and the sink node.

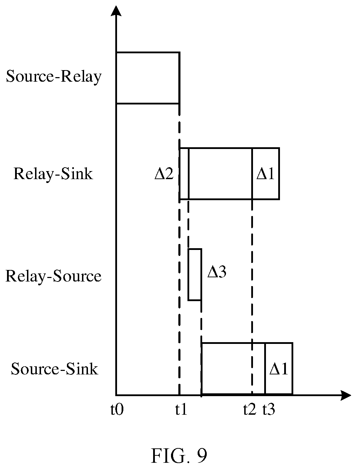

FIG. 9 is a schematic diagram of a latency corresponding to the method shown in FIG. 8.

FIG. 9 further describes, in a time sequence, a process in which a relay node serves as a coordinating node to assist in establishing a source-sink link and performs data transmission via the source-sink link and a source-relay-sink link.

For the source-relay-sink link, in a time period t0-t1, a source node sends control signaling and data to the relay node. Before this, the coordinating node, namely, the relay node, has determined a transmit/receive beam sequence of the source node-sink node link based on interaction with the source node and the sink node.

In a time period Δ2, the sink node receives configuration information from the relay node.

In a time period t1+Δ2-t2, the relay node sends data to the sink node.

Correspondingly, the sink node receives the data sent by the relay node. The data is received by the relay node from the source node, and the data may be received based on the configuration information of the relay node received by the sink node in the time period Δ2.

A time period Δ1 is processing time of the data received by the sink node, including physical-layer processing time and higher-layer processing time.

In a time period Δ3, the source node receives the configuration information from the relay node.

In the time period Δ2 and the time period Δ3, the relay node may separately send the configuration information to the sink node and the source node on different time-frequency resources for the source-sink link.

For the source node-sink node link, because the relay node has configured related information for the link in the time periods Δ2 and Δ3, after Δ3 ends, that is, in the time period t1+Δ2+Δ3-t3, the source node sends data to the sink node, and then in the time period Δ1, the sink node processes information directly received from the source node.

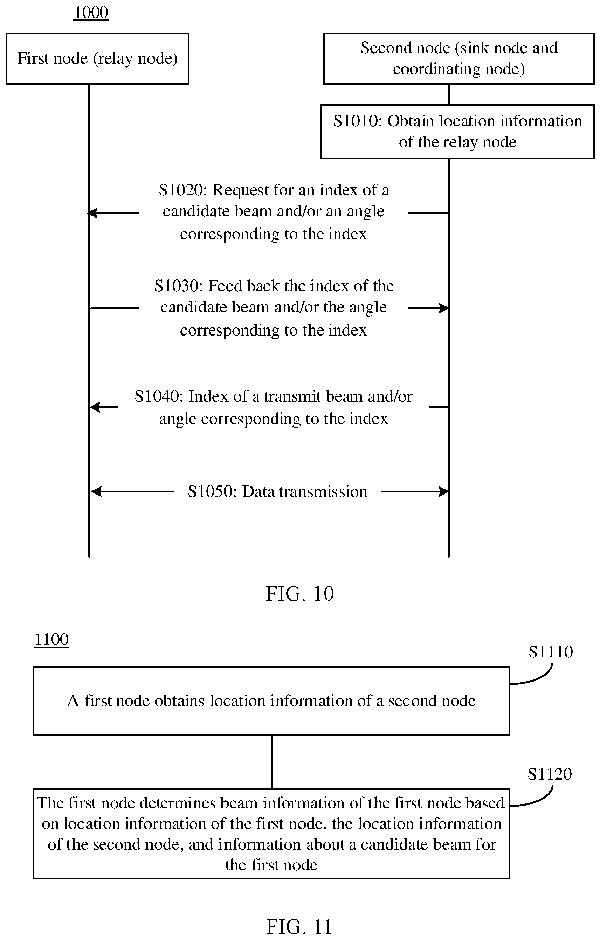

FIG. 10 is a schematic flowchart of a beam configuration method according to an embodiment of the application.

In a method 1000, a second node is a coordinating node and also a sink node. A third node is a source node (not shown in the figure). A first node is a relay node. A link between the source node and the relay node is a first link. A link between the source node and the sink node is a second link. There is a to-be-established third link between the relay node and the sink node.

In the technical solution of the method 1000, the coordinating node determines indexes and/or angles of transmit and receive beams for the relay node and the coordinating node by using location information of the relay node.

S1010: The sink node obtains the location information of the relay node.

The location information may be coordinates, or may be a geographical location range such as a coordinate range.

The location information of the relay node may be sent to the sink node via the source node. After obtaining the location information of the relay node, the sink node may determine a length and a direction of the third link with reference to location information of the sink node. If a length of a link is less than a specific threshold, establishment of the third link may be triggered.

S1020: The sink node requests the relay node for an index of a candidate beam and/or an angle corresponding to the index of the candidate beam via the source node.

S 1020 is not a necessary step. The relay node may also periodically feed back the index of the candidate beam and/or the angle corresponding to the index of the candidate beam to the sink node via the source node.

S1030: The relay node feeds back the index of the candidate beam and/or the angle corresponding to the index of the candidate beam to the sink node via the source node.

Feedback information is a feedback on request information in S 1020.

S 1040: The sink node sends an index of a transmit beam for the relay node and/or an angle corresponding to the index of the transmit beam for the relay node via the source node.

In S1040, the sink node configures an index of a receive beam and/or an angle corresponding to the index of the receive beam for the sink node, and may further configure other information. The other information may include transmit power and a time-frequency resource of the relay node, a time-frequency resource, a feedback resource, content, and the like of the sink node.

S1050: The sink node and the relay node perform data transmission.

Based on a condition of beam pairing and measurement of quality of a channel, the sink node, as a data receiver, may further trigger beam reconfiguration when the quality of the channel is excessively poor or beam pairing fails.

The application further provides another technical solution to implement technical effect of the application. The following describes the technical solution in detail with reference to FIG. 11 to FIG. 12.

FIG. 11 is a schematic flowchart of a beam configuration method according to an embodiment of the application.

The method 1100 shown in FIG. 11 may include steps S1110 and S1120. The following describes the steps in detail with reference to the accompanying drawings.

S1110: A first node obtains location information of a second node.

In the embodiment of the application, there is no direct link between the first node and the second node, and the location information of the second node may be obtained via another node. For example, the first node obtains the location information of the second node via the third node. A link between the third node and the first node is a first link, and a link between the third node and the second node is a second link.

In some embodiments, the first node obtains the location information of the second node from the third node via the first link. The third node may determine the location information of the second node based on parameters of the second link between the third node and the second node, for example, a transmit beam and a length of the link. A manner of determining the length of the link is provided above, and details are not described herein again.

In some other embodiments, the first node obtains the location information from the second node via the first link and the second link, that is, the second node sends the location information of the second node to the first node via the third node.

The first node can learn location information of the first node.

The location information of the first node and the second node may be coordinates of the first node and the second node, may be absolute coordinates, or may be relative coordinates. The location information may be coordinates in a global coordinate system (global coordinate system, GCS), or may be coordinates in a local coordinate system (local coordinate system, LCS).

In some embodiments, the location information may be a specific coordinate location, for example, longitude and latitude coordinates.

In some other embodiments, the location information may be a geographical location range, for example, a coordinate range.

An example in which the location information is the coordinate range is described in detail above with reference to FIG. 3, and details are not described herein again.

In some embodiments, the second node or the third node may actively send the location information of the second node to the first node.

For example, the second node may actively send the location information to the first node via the second link and the first link according to a requirement for establishing a link with the first node.

For another example, the third node can learn that the link needs to be established between the first node and the second node, actively determine the location information of the second node based on information about the second link, and send the location information to the first node.

In some other embodiments, the first node or the third node may further send request information to the second node or the third node to request for the location information of the second node.

For example, the first node needs to determine the location information of the second node, and send the request information to the second node via the third node, to request for the location information of the second node.

For another example, the first node needs to determine the location information of the second node, and directly sends the request information to the third node to request for the location information of the second node, so that the third node may determine the location information of the second node based on the information about the second link between the third node and the second node, and then send the location information to the first node via the first link.

For another example, the third node can learn that the first node needs the location information of the second node. For example, the third node is a data sender, and sends data to the first node and the second node via the first link and the second link. The third node can also learn that the link needs to be established between the first node and the second node, so that the third node sends the request information to the second node in advance to request for the location information of the second node.

For another example, the third node learns that the first node needs the location information of the second node, so that the third node directly determines the location information of the second node based on the information about the link between the third node and the second node, and sends the location information to the first node.

In the embodiment of the application, the first node further forwards the location information of the first node to the second node via the third node. The location information of the first node is used by the second node to determine beam information of the second node.

In some embodiments, the first node actively forwards the location information of the first node to the second node via the third node.

The first node actively sends the location information of the first node to the second node, so that overheads of signaling interaction between the second node and the first node can be reduced.

Optionally, the third node may determine the location information of the first node based on information about the first link, and send the location information of the first node to the second node.

In some other embodiments, the first node receives the request information sent by the third node. The request information indicates the first node to report coordinates corresponding to a first geographical location range.

Optionally, the first node receives request information sent by the second node and forwarded by the third node. The request information indicates the first node to report coordinates corresponding to a first geographical range.

The first node reports, based on the request information, the coordinates corresponding to the first geographical location range. When the link needs to be established between the first node and the second node, the first node may report the location information of the first node to the second node in a timely manner, so that the second node may configure the beam information of the second node based on the location information. This reduces a beam sweeping range of the second node, and reduces a latency and overheads.

S 1120: The first node determines beam information of the first node based on the location information of the first node, the location information of the second node, and information about a candidate beam for the first node.

In the embodiment of the application, the information about the candidate beam for the first node may be an index of the candidate beam for the first node and/or an angle corresponding to the index of the candidate beam for the first node.

Optionally, the information about the candidate beam for the first node may further include at least one of a beam number, a beam management resource number, an uplink signal resource number, a downlink signal resource number, a sidelink signal resource number, an absolute index of a beam, a relative index of the beam, a logical index of the beam, an index of an antenna port corresponding to the beam, an index of an antenna port group corresponding to the beam, an index of a downlink signal corresponding to the beam, a time index of a downlink synchronization signal block corresponding to the beam, beam pair link (beam pair link, BPL) information, a transmit parameter (Tx parameter) corresponding to the beam, a receive parameter (Rx parameter) corresponding to the beam, a transmit weight corresponding to the beam, a weight matrix corresponding to the beam, a weight vector corresponding to the beam, a receive weight corresponding to the beam, an index of the transmit weight corresponding to the beam, an index of the weight matrix corresponding to the beam, an index of the weight vector corresponding to the beam, an index of the receive weight corresponding to the beam, a receive codebook corresponding to the beam, a transmit codebook corresponding to the beam, an index of the receive codebook corresponding to the beam, and an index of the transmit codebook corresponding to the beam.

In the embodiment of the application, the information about the candidate beam for the first node includes information related to at least one of an angle range and a geographical range.

In some embodiments, the information about the candidate beam for the first node may include information about all beams for the first node.

For example, the angle range is not limited, or the angle range is 360°, so that the information about the candidate beam for the first node or the second node includes information about all beams for the first node or the second node or a subset of a maximum quantity of correspondingly configured beams.

In some other embodiments, the information about the candidate beam for the first node may include information about a part of beams for the first node. For example, the information about the candidate beam for the first node includes information about a beam within a specific angle range or geographical location range.

The beam is a beam of which the angle may be within, for example, a range of 0 to 180°. A geographical location may also correspond to an angle. For example, coordinates or a location range of the second node is in a northerly direction of the first node. When the first node communicates with the second node, only a beam in an angle range of 180° from 90° north by west to 90° north by east may be selected as a candidate beam.

In the embodiment of the application, the first node may send candidate resource information of the first node to the third node. The candidate resource information of the first node is used by the third node to determine a time-frequency resource of a transmit or receive beam for the first node and/or a feedback resource of the first node. The feedback resource is used to feed back, to the third node, at least one of a status of beam pairing on the third link, a status of data transmission on the third link, or quality of a channel on the third link.

Correspondingly, the third node receives the candidate resource information sent by the first node, to determine the time-frequency resource of the transmit or receive beam for the first node based on the information about the candidate resource of the first node. If the first node is a receive node on the third link, the third node may further determine the feedback resource of the first node.

In some embodiments, the first node is a transmit node when communication is established between the first node and the second node, and the candidate resource information of the first node is used by the third node to determine the time-frequency resource of the transmit beam for the first node.

In some other embodiments, the first node is a receive node when communication is established between the first node and the second node, and the candidate resource information of the first node is used by the third node to determine the time-frequency resource of the receive beam for the first node and/or the feedback resource of the first node.

Optionally, the third node may further determine feedback content of the first node. The feedback content includes at least one of a condition of beam pairing between the first node and the second node, the status of data transmission on the third link, and the quality of the channel on the third link.

The foregoing feedback content is described in detail above, and details are not described herein again.

The third node configures the time-frequency resource and/or the feedback resource of the receive or transmit beam for the first node, to handle duplex matching and avoid a resource conflict.

In the embodiment of the application, if the first node is the transmit node in the first node and the second node, the first node further sends information about an antenna gain, on the first link, of the first node to the third node. The information about the antenna gain is used by the third node to determine transmit power of the first node on the third link.

Correspondingly, the third node receives the information about the antenna gain, on the first link, of the first node. The information about the antenna gain is used by the third node to determine the transmit power of the first node on the third link.

The third node may further determine the transmit power of the transmit node on the third link based on path loss information that is of the third link and that is predicted by the third node, and information that is sent by the second node and that is about an antenna gain, on the second link, of the second node.

Therefore, the third node may flexibly determine the transmit power based on information about the third link, to avoid impact on communication of another link due to excessively high power, and impact on communication quality due to excessively low power, which causes the power to need to gradually increase.

After configuring the transmit power of the first node, the third node may send transmit power information to the first node, to indicate the first node to perform communication at corresponding power.

It should be understood that the foregoing solution in which the first node or the second node or both configure the beam information for a beam subset may also enable the first node and/or the second node to perform beam sweeping in a small range. This reduces sweeping overheads of the first node and/or the second node, and reduces a latency and energy consumption.

In addition, because the coordinate system conversion process is described in detail in the method 200, if a coordinating node needs to perform coordinate conversion in a process of configuring other information for the first node and/or the second node, the coordinate conversion process is as described above, and is not described in the method 1100 and the following specific embodiment 1200 again.

In the embodiment of the application, the third node may be any one of a source node, a relay node, or a sink node.

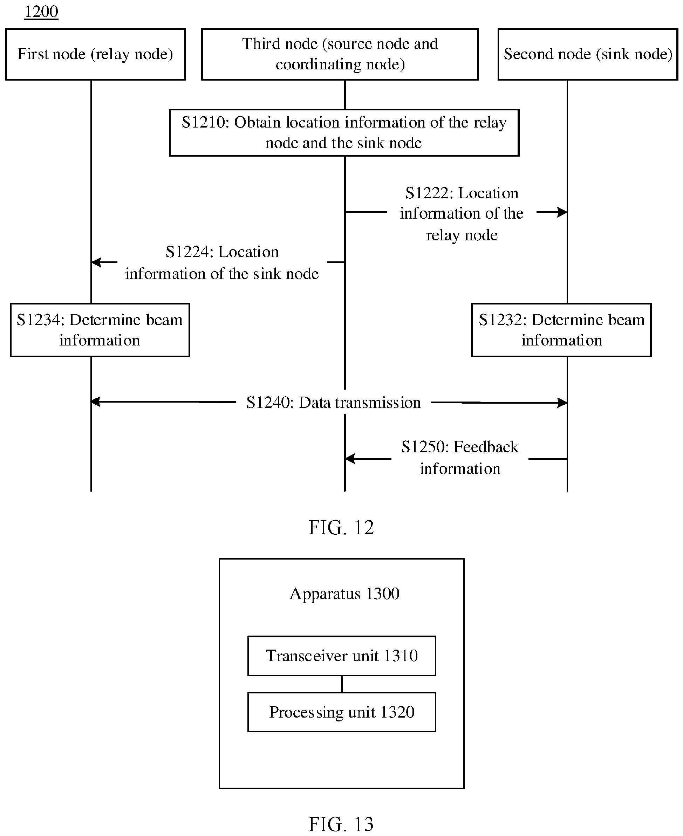

To further understand the method 1100, the following describes a specific embodiment corresponding to the method 1100 by using FIG. 12.

FIG. 12 is a schematic flowchart of a beam configuration method according to an embodiment of the application.

In a method 1200, a third node is a source node and also a coordinating node. A first node is a relay node. A second node is a sink node. A link between the relay node and the source node is a first link. A link between the source node and the sink node is a second link. There is a to-be-established third link or a third link of a to-be-determined beam between the sink node and the relay node.

S1210: The source node obtains location information of the relay node and the sink node.

In S1210, the source node may directly determine the location information of the relay node based on information about the first link (a direction of the link and a length of the link) between the source node and the relay node, or may send request information to the relay node to request for the location information of the relay node.

A manner in which the source node obtains the location information of the sink node is similar to a manner in which the source node obtains the location information of the relay node, and details are not described herein again.

The location information of the relay node and the sink node may be represented in a form of coordinates, or may be identified by a geographical location range or a coordinate location range. The location information may be absolute location information or relative location information.

S1222: The source node sends the location information of the relay node to the sink node.

S1222: The source node sends the location information of the sink node to the relay node.

In S 1220, after receiving the location information of the source node, the relay node may further process the location information to obtain the direction of the link, to configure a corresponding transmit/receive beam.

S1232: The sink node determines beam information of the sink node.

S1234: The relay node determines beam information of the relay node.

In S 1232 and S 1234, the beam information of the sink node and the relay node is determined based on the location information of the sink node and the relay node.

For example, the sink node determines receive beam information of the sink node based on the location information of the sink node, the location information of the relay node, and information about a candidate beam for the sink node.

The relay node determines transmit beam information of the relay node based on the location information of the relay node, the location information of the sink node, and information about a candidate beam for the relay node.

The beam information may be an angle of a beam and/or an index of a beam, and the beam information indicates a corresponding beam.

S 1240: The relay node and the sink node perform data transmission.

S 1250: The sink node sends feedback information to the source node.

Optionally, the source node may further configure a time-frequency resource and transmit power that correspond to the transmit beam for the relay node, and configure a time-frequency resource, a feedback resource, feedback content, and the like that correspond to the receive beam for the sink node.

A specific feedback manner and content are as described in the foregoing embodiments. If the source node receives a feedback NACK, the source node may be triggered to reconfigure the transmit/receive beam, and the source node reconfigures another related resource.

The foregoing describes in detail method embodiments in embodiments of the application with reference to FIG. 1 to FIG. 12. The following describes in detail apparatus embodiments in embodiments of the application with reference to FIG. 13 to FIG. 15. It should be understood that descriptions of method embodiments correspond to descriptions of apparatus embodiments. Therefore, for parts not described in detail, refer to the foregoing method embodiments.

FIG. 13 is a schematic block diagram of an apparatus according to an embodiment of the application.

The apparatus in FIG. 13 is configured to implement the technical solutions corresponding to FIG. 2 to FIG. 10.

An apparatus 1300 is used in a communication system. The communication system includes a first node, a second node, and a third node. The apparatus is a coordinating node. The coordinating node is any one of the first node, the second node, and the third node. The apparatus includes:
a transceiver unit 1310, configured to obtain first information, where the first information includes information about a candidate beam for the first node and information about a candidate beam for the second node; and
a processing unit 1320, configured to determine beam information of the first node and beam information of the second node based on the first information, where the beam information of the first node indicates a transmit beam for the first node, and the beam information of the second node indicates a receive beam for the second node.

Optionally, the transceiver unit 1310 is specifically configured to obtain the first information in at least one of the following manners: receiving the information that is about the candidate beam for the first node and that is reported by the first node; or receiving the information that is about the candidate beam for the second node and that is reported by the second node.

Optionally, the transceiver unit 1310 is further configured to perform at least one of the following operations: sending first request information to the first node, where the first request information indicates the first node to report the information about the candidate beam for the first node; or sending second request information to the second node, where the second request information indicates the second node to report the information about the candidate beam for the second node.

Optionally, the information about the candidate beam includes information related to at least one of an angle range and a geographical range.

Optionally, the information about the candidate beam for the first node includes at least one of an index of the candidate beam for the first node, an angle corresponding to the index of the candidate beam for the first node, and a quantity of candidate beams for the first node. The information about the candidate beam for the second node includes at least one of an index of the candidate beam for the second node, an angle corresponding to the index of the candidate beam for the second node, and a quantity of candidate beams for the second node.

Optionally, the quantity of candidate beams is determined based on location information of the first node and location information of the second node.

Optionally, the beam information of the first node includes a transmit beam sequence of the first node, and the beam information of the second node includes a receive beam sequence of the second node.

Optionally, the processing unit is specifically configured to determine at least one of an index of the transmit beam for the first node and an angle corresponding to the index of the transmit beam for the first node based on at least one of the index of the candidate beam for the first node and the angle corresponding to the index of the candidate beam for the first node; and determine at least one of an index of the receive beam for the second node and an angle corresponding to the index of the receive beam for the second node based on at least one of the index of the candidate beam for the second node and the angle corresponding to the index of the candidate beam for the second node.

Optionally, the first information further includes at least one of first sub-information and second sub-information. The first sub-information includes a direction of a first link, a length of the first link, a direction of a second link, and a length of the second link. The second sub-information includes the location information of the first node and the location information of the second node. The first link is a link between the first node and the third node. The second link is a link between the second node and the third node. The processing unit 1320 is specifically configured to: determine the beam information of the first node based on at least one of the first sub-information and the second sub-information and the information about the candidate beam for the first node; and determine the beam information of the second node based on at least one of the first sub-information and the second sub-information and the information about the candidate beam for the second node.

Optionally, a distance between the first node and the second node is determined based on at least one of the first sub-information and the second sub-information. When the distance between the first node and the second node is less than a preset threshold, the beam information of the first node and the beam information of the second node are determined.

Optionally, the transceiver unit 1310 is further configured to obtain second information. The second information includes candidate resource information of the first node and candidate resource information of the second node. The processing unit 1320 is further configured to determine transmission resource information of the first node and reception resource information of the second node based on the second information. The transmission resource information of the first node indicates a resource of the transmit beam for the first node, and the reception resource information of the second node indicates a resource of the receive beam for the second node.

Optionally, the transceiver unit 1310 is further configured to: send the transmission resource information of the first node to the first node; and send the reception resource information of the second node to the second node. The transmission resource information of the first node indicates the resource of the transmit beam for the first node, and the reception resource information of the second node indicates the resource of the receive beam for the second node.

Optionally, the transceiver unit 1310 is further configured to obtain third information. The third information includes at least one of information about the distance between the first node and the second node, information about an antenna gain, on the first link, of the first node, information about an antenna gain, on the second link, of the second node, and path loss information that is of a third link and that is predicted by the coordinating node. The third link is a link that is between the first node and the second node and that is used for communication. The processing unit 1320 is further configured to determine transmit power of the first node based on the third information.

Optionally, when the coordinating node is the second node or the third node, the transceiver unit is further configured to send transmit power information of the first node to the first node. The transmit power information of the first node indicates the transmit power of the first node.

Optionally, the processing unit 1320 is further configured to determine feedback resource information of the second node. The feedback resource information of the second node indicates a feedback resource of the second node. The feedback resource is used to feed back, to the coordinating node, at least one of a status of beam pairing between the first node and the second node, a status of data transmission between the first node and the second node, and quality of a channel between the first node and the second node.

Optionally, the coordinating node is the third node, and the transceiver unit 1310 is specifically configured to: directly obtain the information about the candidate beam for the first node from the first node; and directly obtain the information about the candidate beam for the second node from the second node. Alternatively, the coordinating node is one of the first node and the second node, and the transceiver unit 1310 is specifically configured to indirectly obtain the information about the candidate beam for the other one of the first node and the second node via the third node.

Optionally, the transceiver unit 1310 is further configured to perform at least one of the following operations: sending first indication information to the first node, where the first indication information includes the beam information of the first node; or sending second indication information to the second node, where the second indication information includes the beam information of the second node.

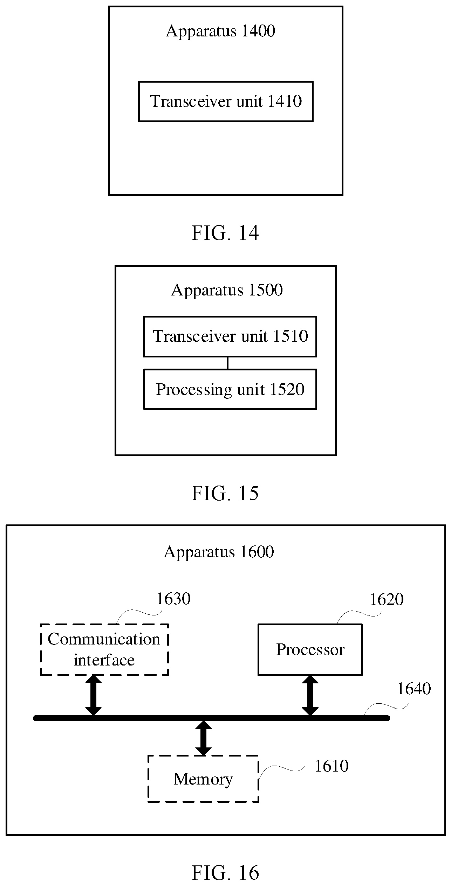

FIG. 14 is a schematic block diagram of an apparatus according to an embodiment of the application.

The apparatus in FIG. 14 is configured to implement the technical solutions corresponding to FIG. 2 to FIG. 10.

An apparatus 1400 is used in a communication system. The communication system includes a first node, a second node, and a third node. A coordinating node is the third node or the second node. The apparatus is the first node. The apparatus includes:
a transceiver unit 1410, configured to:
send information about a candidate beam for the first node to the coordinating node; and
receive beam information of the first node from the coordinating node, where the beam information of the first node indicates a transmit beam or a receive beam for the first node.

Optionally, the transceiver unit 1410 is further configured to receive first request information sent by the coordinating node. The first request information indicates the first node to report the information about the candidate beam for the first node.

Optionally, the information about the candidate beam for the first node includes information related to at least one of an angle range and a geographical range.

Optionally, the information about the candidate beam for the first node includes at least one of an index of the candidate beam for the first node, an angle corresponding to the index of the candidate beam for the first node, and a quantity of candidate beams for the first node.

Optionally, the quantity of candidate beams for the first node is determined based on location information of the first node and location information of the second node.

Optionally, the location information of the second node is received from the coordinating node.

Optionally, the beam information of the first node includes at least one of an index of a beam for the first node and an angle corresponding to the index of the beam for the first node; or the beam information of the first node includes a beam sequence of the first node.

Optionally, the beam information of the first node is determined based on at least one of first sub-information and second sub-information and the information about the candidate beam for the first node. The first sub-information includes a direction of a first link, a length of the first link, a direction of a second link, and a length of the second link. The second sub-information includes the location information of the first node and the location information of the second node. The first link is a link between the first node and the third node. The second link is a link between the second node and the third node.

Optionally, the transceiver unit 1410 is further configured to send candidate resource information of the first node to the coordinating node. The candidate resource information of the first node is used by the coordinating node to determine at least one of a time-frequency resource of the transmit beam or the receive beam for the first node and a feedback resource of the first node. The feedback resource is used to feed back, to the coordinating node, at least one of a status of beam pairing between the first node and the second node, a status of data transmission between the first node and the second node, and quality of a channel between the first node and the second node.

Optionally, the transceiver unit 1410 is further configured to receive resource information of the first node from the coordinating node. The resource information of the first node includes at least one of a resource of the transmit beam or the receive beam for the first node and the feedback resource of the first node. The feedback resource is used to feed back, to the coordinating node, at least one of the status of beam pairing between the first node and the second node, the status of data transmission between the first node and the second node, and the quality of the channel between the first node and the second node.

Optionally, the transceiver unit 1410 is further configured to send information about an antenna gain, on the first link, of the first node to the coordinating node. The information about the antenna gain is used by the coordinating node to determine transmit power of the first node on a third link. The third link is a link that is between the first node and the second node and that is used for communication.

Optionally, the first node is a transmit node in the first node and the second node. The transceiver unit 1410 is further configured to receive transmit power information of the first node from the coordinating node. The transmit power information of the first node indicates the transmit power of the first node.

Optionally, the coordinating node is the third node, and the transceiver unit 1410 is specifically configured to directly send the information about the candidate beam for the first node to the coordinating node via the first node. Alternatively, the coordinating node is the second node, and the transceiver unit 1410 is specifically configured to indirectly send the information about the candidate beam for the first node to the coordinating node via the third node.

FIG. 15 is a schematic block diagram of an apparatus according to an embodiment of the application.

The apparatus in FIG. 15 is configured to implement the technical solutions corresponding to FIG. 11 to FIG. 12.

As shown in FIG. 15, the apparatus is a first node. The apparatus includes:
a transceiver unit 1510, configured to obtain location information of a second node; and
a processing unit 1520, configured to determine beam information of the first node based on location information of the first node, the location information of the second node, and information about a candidate beam for the first node. The beam information of the first node indicates a transmit or receive beam for the first node.

In the technical solutions provided in the application, the first node determines the beam information of the first node based on the location information of the first node and the obtained location information of the second node, to prevent the first node from sweeping full-range beams when the first node communicates with the second node. This reduces a beam sweeping range, and reduces overheads and a latency.

Optionally, the processing unit 1520 is specifically configured to determine a direction of a third link based on the location information of the first node and the location information of the second node. The first node determines the information about the candidate beam for the first node based on the information about the candidate beam for the first node and the direction of the third link. The third link is a link that is between the first node and the second node and that is used for communication.

The apparatus may determine the direction of the third link based on the location information of the first node and the location information of the second node, and then select, from beams for the first node based on the direction of the third link, a beam close to the direction as the candidate beam. This reduces a beam sweeping range, and reduces the overheads and the latency.

Optionally, the information about the candidate beam for the first node includes information related to at least one of an angle range and a geographical range.

That the information about the candidate beam includes information related to at least one of an angle range and a geographical location range means that the first node determines, based on locations of the second node and the first node, all beam information or a part of the beam information as the information about the candidate beam. When the information about the candidate beam is the part of the beam information, the first node may further determine the beam information of the first node from the part of the beam information. This reduces the beam sweeping range, and reduces the overheads and the latency.

Optionally, the transceiver unit 1510 is specifically configured to obtain the location information of the second node by the apparatus by using a third node.

Because there is no direct link between the first node and the second node, the first node needs to obtain the location information of the second node via the third node. The third node assists in information transmission between the first node and the second node, so that the first node determines beam information for communication of the first node and the second node. This reduces overheads and a latency of sweeping.

Optionally, the transceiver unit 1510 is further configured to forward the location information of the first node to the second node via the third node. The location information of the first node is used by the second node to determine beam information of the second node.

The first node further forwards the location information of the first node to the second node via the third node, so that the second node may also determine the beam information of the second node based on the location information of the first node. This reduces a beam sweeping range when the second node communicates with the first node, and reduces the latency and the overheads.

Optionally, the transceiver unit 1510 is configured to receive first request information sent by the third node. The first request information indicates the first node to report coordinates corresponding to a first geographical range.

The first node may send, based on a request, the coordinates corresponding to the first geographical range to the second node via the third node, so that when the first node needs to communicate with the second node, the first node reports, in a timely manner, the coordinates corresponding to the first geographical range in response to the request information, and the second node determines the beam information of the second node based on this in a timely manner. This reduces the beam sweeping range, and reduces the latency and the overheads.

Optionally, the location information of the second node includes location coordinates of the second node and/or a geographical location range of the second node.

When the location information of the second node is the coordinates, the angle range of the information about the candidate beam that may be determined by the first node is small, and the first node may perform beam sweeping in a smaller range.

When the location information of the second node is the geographical location range, overheads required by the second node to report the geographical location range are small, so that overheads of the second node are reduced. The first node performs beam sweeping based on the geographical location range of the second node. This reduces the overheads and latency of sweeping of the first node.

Optionally, the transceiver unit 1510 is further configured to send candidate resource information of the first node to the third node. The candidate resource information of the first node is used by the third node to determine a time-frequency resource of the transmit or receive beam for the first node and/or a feedback resource of the first node. The feedback resource is used to feed back, to the third node, at least one of a status of beam pairing of beams between the first node and the second node, a status of data transmission between the first node and the second node, and quality of a channel between the first node and the second node.

The third node may configure, by using the time-frequency resource of the first node with reference to a time-frequency resource of the second node, time-frequency resources corresponding to communication beams for the first node and the second node, to handle duplex matching and reduce a resource conflict.

Optionally, the transceiver unit 1510 is further configured to receive resource information of the first node from the third node. The resource information of the first node indicates a resource of the transmit or receive beam for the first node and/or the feedback resource of the first node. The feedback resource is used to feed back, to the third node, at least one of the status of beam pairing of the beams between the first node and the second node, the status of data transmission between the first node and the second node, and the quality of the channel between the first node and the second node.

The third node may further configure the feedback resource for a receive node in the first node and the second node to feed back the status of beam pairing, the status of data transmission, and the quality of the channel, so that when data transmission fails, or the quality of the channel is excessively poor, timely re-determining of the beam information is triggered. This reduces an information transmission latency, and improves data transmission reliability.

Optionally, the first node is a transmit node in the first node and the second node. The transceiver unit 1510 is further configured to send information about an antenna gain, on a first link, of the first node to the third node. The information about the antenna gain is used by the third node to determine transmit power of the first node.

Optionally, the first node is the transmit node in the first node and the second node. The transceiver unit 1510 is further configured to receive the transmit power of the first node from the third node.

The third node determines the transmit power of the first node when the first node communicates with the second node, to ensure appropriate transmit power, and avoid impact on another link when the power is high. When the power is low, the quality of the channel is not high, and the transmit power needs to be increased.

FIG. 16 is a schematic block diagram of an apparatus according to an embodiment of the application.

An apparatus 1600 shown in FIG. 16 may correspond to the apparatus described above. Specifically, the apparatus 1600 may be a specific example of any node in FIG. 1. The apparatus 1600 includes a processor 1620. In the embodiment of the application, the processor 1620 is configured to implement a corresponding control and management operation. For example, the processor 1620 is configured to support the apparatus in performing the methods or operations or functions shown in FIG. 2 to FIG. 5, FIG. 7 to FIG. 8, and FIG. 10 to FIG. 12 in the foregoing embodiments. Optionally, the apparatus 1600 may further include a memory 1610 and a communication interface 1630. The processor 1620, the communication interface 1630, and the memory 1610 may be connected to each other, or may be connected to each other through a bus 1640. The communication interface 1630 is configured to support the apparatus in performing communication. The memory 1610 is configured to store program code and data of the apparatus. The processor 1620 invokes the code or data stored in the memory 1610 to implement a corresponding operation. The memory 1610 may be coupled to or not coupled to the processor. The coupling in the embodiment of the application is an indirect coupling or a communication connection between apparatuses, units, or modules in an electrical form, a mechanical form, or another form, and is for information exchange between the apparatuses, the units, or the modules.

The processor 1620 may be a central processing unit, a general-purpose processor, a digital signal processor, an application-specific integrated circuit, a field-programmable gate array or another programmable logic device, a transistor logic device, a hardware component, or any combination thereof. The processor 1620 may implement or execute various example logical blocks, modules, and circuits described with reference to content disclosed in the application. Alternatively, the processor may be a combination implementing a computing function, for example, a combination including one or more microprocessors, or a combination of the digital signal processor and a microprocessor. The communication interface 1630 may be a transceiver, a circuit, a bus, a module, or another type of communication interface. The bus 1640 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of description, the bus in FIG. 16 is represented by only one thick line. However, it does not indicate that there is only one bus or one type of bus.

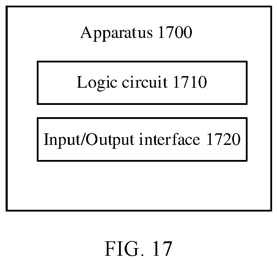

As shown in FIG. 17, an embodiment of the application further provides a communication apparatus 1700. The communication apparatus 1700 includes a logic circuit 1710 and an input/output interface (input/output interface) 1720.

The logic circuit 1710 may be a processing circuit in the communication apparatus 1700. The logic circuit 1710 may be coupled to a storage unit, and invoke instructions in the storage unit, so that the communication apparatus 1700 may implement the methods and functions in embodiments of the application. The input/output interface 1720 may be an input/output circuit in the communication apparatus 1700, and outputs information processed by the communication apparatus 1700, or inputs to-be-processed data or signaling information to the communication apparatus 1700 for processing.

In a solution, the communication apparatus 1700 is configured to implement operations performed by a coordinating node in the foregoing method embodiments.

For example, the logic circuit 1710 is configured to implement processing-related operations performed by the coordinating node in the foregoing method embodiments, for example, the processing-related operations performed by the coordinating node in the embodiments shown in FIG. 2, FIG. 4, FIG. 5, FIG. 7 to FIG. 8, FIG. 10, and FIG. 12. The input/output interface 1720 is configured to implement obtaining and/or sending and/or receiving-related operations performed by a terminal device in the foregoing method embodiments, for example, the sending and/or receiving-related operations performed by the terminal device in the embodiment shown in FIG. 3. For operations performed by the logic circuit 1710, specifically refer to the foregoing description for the processing unit 1320. For operations performed by the input/output interface 1720, refer to the foregoing description for the transceiver unit 1310. Details are not described herein again.

In another solution, the communication apparatus 1700 is configured to implement operations performed by a first node and/or a second node in the foregoing method embodiments.

For example, the logic circuit 1710 is configured to implement processing-related operations performed by the first node and/or the second node in the foregoing method embodiments, for example, the processing-related operations performed by the first node and/or the second node in the embodiments shown in FIG. 2, FIG. 4, FIG. 5, FIG. 7 to FIG. 8, FIG. 10, FIG. 11, and FIG. 12. The input/output interface 1720 is configured to implement sending and/or receiving-related operations performed by the first node and/or the second node in the foregoing method embodiments, for example, the sending and/or receiving-related operations performed by the first node and/or the second node in the embodiment shown in FIG. 12. For the operations performed by the logic circuit 1710, specifically refer to the foregoing description for the processing unit 1520. For the operations performed by the input/output interface 1720, refer to the foregoing description for the transceiver unit 1410 or 1510. Details are not described herein again.

The application further provides a computer-readable storage medium. The computer-readable storage medium stores computer-executable instructions. When the computer-executable instructions are run on a computer, the computer is enabled to perform corresponding procedures of the methods in FIG. 2, FIG. 4, FIG. 5, FIG. 7 to FIG. 8, and FIG. 10 to FIG. 12.

The application further provides an apparatus. The apparatus includes at least one processor. The processor is coupled to a memory. The memory is configured to store instructions, to implement corresponding procedures of the methods in FIG. 2, FIG. 4, FIG. 5, FIG. 7, FIG. 8, and FIG. 10 to FIG. 12. Optionally, the apparatus further includes the memory. The memory and the processor may be separately deployed, or may be deployed in a centralized manner. Optionally, the apparatus further includes a communication interface, and the processor is coupled to the communication interface.

The application further provides an apparatus. The apparatus includes at least one logic circuit and an input/output interface. The logic circuit is configured to be coupled to the input/output interface, and transmit data through the input/output interface, to perform corresponding procedures of the methods in FIG. 2, FIG. 4, FIG. 5, FIG. 7, FIG. 8, and FIG. 10 to FIG. 12.

The application further provides a computer program product, including computer program code. When the computer program code is run, a computer is enabled to perform corresponding procedures of the methods in FIG. 2, FIG. 4, FIG. 5, FIG. 7, FIG. 8, and FIG. 10 to FIG. 12.

A person of ordinary skill in the art may be aware that units and algorithm steps in examples described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the application, it should be understood that the disclosed system, apparatus, and method may be implemented in other manners. For example, the foregoing apparatus embodiments are merely examples. For example, division into units is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in an electrical form, a mechanical form, or another form.

The units described as separate components may or may not be physically separate, and components displayed as units may or may not be physical units, may be located in one place, or may be distributed on a plurality of network units. Some or all of the units may be selected according to actual requirements to achieve the objectives of the solutions of embodiments.

In addition, functional units in embodiments of the application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of the application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of the application. The foregoing storage medium includes any medium that may store program code, such as a USB flash drive, a removable hard disk, a read-only memory (read-only memory, ROM), a random access memory (random access memory, RAM), a magnetic disk, or an optical disc.

The foregoing descriptions are merely specific implementations of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A beam configuration method, applied to a communication system, wherein the communication system comprises a first node, a second node, and a third node, a coordinating node is any one of the first node, the second node, and the third node, and the method comprises:
obtaining, by the coordinating node, first information, wherein the first information comprises information about a candidate beam for the first node and information about a candidate beam for the second node; and
determining, by the coordinating node based on the first information, beam information of the first node and beam information of the second node, wherein the beam information of the first node indicates a transmit beam for the first node, and the beam information of the second node indicates a receive beam for the second node.

2. The method according to claim 1, wherein the obtaining, by the coordinating node, first information comprises:
obtaining, by the coordinating node, the first information in at least one of the following manners:
receiving, by the coordinating node, the information that is about the candidate beam for the first node and that is reported by the first node; or
receiving, by the coordinating node, the information that is about the candidate beam for the second node and that is reported by the second node.

3. The method according to claim 1 or 2, wherein before the obtaining, by the coordinating node, first information, the method further comprises:
performing, by the coordinating node, at least one of the following operations:
sending, by the coordinating node, first request information to the first node, wherein the first request information indicates the first node to report the information about the candidate beam for the first node; or
sending, by the coordinating node, second request information to the second node, wherein the second request information indicates the second node to report the information about the candidate beam for the second node.

4. The method according to any one of claims 1 to 3, wherein the information about the candidate beam comprises information related to at least one of an angle range and a geographical range.

5. The method according to any one of claims 1 to 4, wherein
the information about the candidate beam for the first node comprises at least one of an index of the candidate beam for the first node, an angle corresponding to the index of the candidate beam for the first node, and a quantity of candidate beams for the first node; and
the information about the candidate beam for the second node comprises at least one of an index of the candidate beam for the second node, an angle corresponding to the index of the candidate beam for the second node, and a quantity of candidate beams for the second node.

6. The method according to any one of claims 1 to 5, wherein
the beam information of the first node comprises a transmit beam sequence of the first node; and
the beam information of the second node comprises a receive beam sequence of the second node.

7. The method according to claim 5, wherein
the determining, by the coordinating node based on the first information, beam information of the first node and beam information of the second node comprises:
determining, by the coordinating node based on at least one of the index of the candidate beam for the first node and the angle corresponding to the index of the candidate beam for the first node, at least one of an index of the transmit beam for the first node and an angle corresponding to the index of the transmit beam for the first node; and
determining, by the coordinating node based on at least one of the index of the candidate beam for the second node and the angle corresponding to the index of the candidate beam for the second node, at least one of an index of the receive beam for the second node and an angle corresponding to the index of the receive beam for the second node.

8. The method according to any one of claims 1 to 7, wherein the first information further comprises at least one of first sub-information and second sub-information, the first sub-information comprises a direction of the first link, a length of the first link, a direction of the second link, and a length of the second link, and the second sub-information comprises location information of the first node and location information of the second node, wherein
the first link is a link between the first node and the third node, and the second link is a link between the second node and the third node; and
the determining, by the coordinating node based on the first information, beam information of the first node and beam information of the second node comprises:
determining, by the coordinating node based on at least one of the first sub-information and the second sub-information and the information about the candidate beam for the first node, the beam information of the first node; and
determining, by the coordinating node based on at least one of the first sub-information and the second sub-information and the information about the candidate beam for the second node, the beam information of the second node.

9. The method according to any one of claims 1 to 8, further comprising:
performing, by the coordinating node, at least one of the following operations:
sending transmission resource information of the first node to the first node; or
sending reception resource information of the second node to the second node, wherein
the transmission resource information of the first node indicates a resource of the transmit beam for the first node, and the reception resource information of the second node indicates a resource of the receive beam for the second node.

10. The method according to any one of claims 1 to 9, further comprising:
the coordinating node is the second node or the third node, and the coordinating node sends transmit power information of the first node to the first node, wherein the transmit power information of the first node indicates transmit power of the first node.

11. The method according to any one of claims 1 to 10, further comprising:
the coordinating node is the first node or the third node, and the coordinating node sends feedback resource information of the second node to the second node, wherein the feedback resource information of the second node indicates a feedback resource of the second node, and the feedback resource is used to feed back, to the coordinating node, at least one of a status of beam pairing between the first node and the second node, a status of data transmission between the first node and the second node, and quality of a channel between the first node and the second node.

12. The method according to any one of claims 1 to 11, wherein
the coordinating node is the third node, and the obtaining, by the coordinating node, first information comprises:
directly obtaining, by the coordinating node, the information about the candidate beam for the first node from the first node, and
directly obtaining, by the coordinating node, the information about the candidate beam for the second node from the second node; or
the coordinating node is one of the first node and the second node, and the obtaining, by the coordinating node, first information comprises:
indirectly obtaining, by the coordinating node via the third node, the information about the candidate beam for the other one of the first node and the second node.

13. The method according to any one of claims 1 to 12, further comprising:
performing, by the coordinating node, at least one of the following operations:
sending, by the coordinating node, first indication information to the first node, wherein the first indication information comprises the beam information of the first node; or
sending, by the coordinating node, second indication information to the second node, wherein the second indication information comprises the beam information of the second node.

14. A beam configuration method, applied to a communication system, wherein the communication system comprises a first node, a second node, and a third node, a coordinating node is the third node or the second node, and the method comprises:
sending, by the first node, information about a candidate beam for the first node to the coordinating node; and
receiving, by the first node, beam information of the first node from the coordinating node, wherein the beam information of the first node indicates a transmit beam or a receive beam for the first node.

15. The method according to claim 14, wherein before the sending, by the first node, information about a candidate beam for the first node to the coordinating node, the method further comprises:
receiving, by the first node, first request information sent by the coordinating node, wherein the first request information indicates the first node to report the information about the candidate beam for the first node.

16. The method according to claim 14 or 15, wherein the information about the candidate beam for the first node comprises information related to at least one of an angle range and a geographical range.

17. The method according to any one of claims 14 to 16, wherein
the information about the candidate beam for the first node comprises at least one of an index of the candidate beam for the first node, an angle corresponding to the index of the candidate beam for the first node, and a quantity of candidate beams for the first node.

18. The method according to any one of claims 14 to 17, wherein
the beam information of the first node comprises at least one of an index of a beam for the first node and an angle corresponding to the index of the beam for the first node; or
the beam information of the first node comprises a beam sequence of the first node.

19. The method according to any one of claims 14 to 18, wherein the beam information of the first node is determined based on at least one of first sub-information and second sub-information and the information about the candidate beam for the first node, wherein
the first link is a link between the first node and the third node, and the second link is a link between the second node and the third node; and
the first sub-information comprises a direction of the first link, a length of the first link, a direction of the second link, and a length of the second link, and the second sub-information comprises location information of the first node and location information of the second node.

20. The method according to any one of claims 14 to 19, further comprising:
receiving, by the first node, resource information of the first node from the coordinating node, wherein the resource information of the first node comprises at least one of a resource of the transmit beam or the receive beam for the first node and a feedback resource of the first node, and the feedback resource is used to feed back, to the coordinating node, at least one of a status of beam pairing between the first node and the second node, a status of data transmission between the first node and the second node, and quality of a channel between the first node and the second node.

21. The method according to any one of claims 14 to 20, further comprising:
the first node is a transmit node in the first node and the second node, and the first node receives transmit power information of the first node from the coordinating node, wherein the transmit power information of the first node indicates transmit power of the first node.

22. An apparatus, used in a communication system, wherein the communication system comprises a first node, a second node, and a third node, the apparatus is a coordinating node, the coordinating node is any one of the first node, the second node, and the third node, and the apparatus comprises:
a transceiver unit, configured to obtain first information, wherein the first information comprises information about a candidate beam for the first node and information about a candidate beam for the second node; and
a processing unit, configured to determine beam information of the first node and beam information of the second node based on the first information, wherein the beam information of the first node indicates a transmit beam for the first node, and the beam information of the second node indicates a receive beam for the second node.

23. The apparatus according to claim 22, wherein the transceiver unit is specifically configured to obtain the first information in at least one of the following manners:
receiving the information that is about the candidate beam for the first node and that is reported by the first node; or
receiving the information that is about the candidate beam for the second node and that is reported by the second node.

24. The apparatus according to claim 22 or 23, wherein the transceiver unit is further configured to perform at least one of the following operations:
sending first request information to the first node, wherein the first request information indicates the first node to report the information about the candidate beam for the first node; and
sending second request information to the second node, wherein the second request information indicates the second node to report the information about the candidate beam for the second node.

25. The apparatus according to any one of claims 22 to 24, wherein the information about the candidate beam comprises information related to at least one of an angle range and a geographical range.

26. The apparatus according to any one of claims 22 to 25, wherein
the information about the candidate beam for the first node comprises at least one of an index of the candidate beam for the first node, an angle corresponding to the index of the candidate beam for the first node, and a quantity of candidate beams for the first node; and
the information about the candidate beam for the second node comprises at least one of an index of the candidate beam for the second node, an angle corresponding to the index of the candidate beam for the second node, and a quantity of candidate beams for the second node.

27. The apparatus according to any one of claims 22 to 26, wherein
the beam information of the first node comprises at least one of an index of the transmit beam for the first node and an angle corresponding to the index of the transmit beam for the first node; and
the beam information of the second node comprises at least one of an index of the receive beam for the second node and an angle corresponding to the index of the receive beam for the second node; or
the beam information of the first node comprises a transmit beam sequence of the first node; and
the beam information of the second node comprises a receive beam sequence of the second node.

28. The apparatus according to any one of claims 22 to 27, wherein the first information further comprises at least one of first sub-information and second sub-information, the first sub-information comprises a direction of the first link, a length of the first link, a direction of the second link, and a length of the second link, and the second sub-information comprises location information of the first node and location information of the second node, wherein
the first link is a link between the first node and the third node, and the second link is a link between the second node and the third node; and
the processing unit is specifically configured to:
determine the beam information of the first node based on at least one of the first sub-information and the second sub-information and the information about the candidate beam for the first node; and
determine the beam information of the second node based on at least one of the first sub-information and the second sub-information and the information about the candidate beam for the second node.

29. The apparatus according to any one of claims 22 to 28, wherein
the coordinating node is the second node or the third node, and the transceiver unit is further configured to:
send transmit power information of the first node to the first node, wherein the transmit power information of the first node indicates transmit power of the first node.

30. The apparatus according to any one of claims 22 to 29, wherein
the coordinating node is the first node or the third node, and the transceiver unit is further configured to send feedback resource information of the second node to the second node, wherein the feedback resource information of the second node indicates a feedback resource of the second node, and the feedback resource is used to feed back, to the coordinating node, at least one of a status of beam pairing between the first node and the second node, a status of data transmission between the first node and the second node, and quality of a channel between the first node and the second node.

31. The apparatus according to any one of claims 22 to 30, wherein the transceiver unit is further configured to perform at least one of the following operations:
sending first indication information to the first node, wherein the first indication information comprises the beam information of the first node; or
sending second indication information to the second node, wherein the second indication information comprises the beam information of the second node.

32. An apparatus, used in a communication system, wherein the communication system comprises a first node, a second node, and a third node, a coordinating node is the third node or the second node, the apparatus is the first node, the apparatus comprises a transceiver unit, and the transceiver unit is configured to:
send information about a candidate beam for the first node to the coordinating node; and
receive beam information of the first node from the coordinating node, wherein the beam information of the first node indicates a transmit beam or a receive beam for the first node.

33. The apparatus according to claim 32, wherein the transceiver unit is further configured to:
receive first request information sent by the coordinating node, wherein the first request information indicates the first node to report the information about the candidate beam for the first node.

34. The apparatus according to claim 32 or 33, wherein the information about the candidate beam for the first node comprises information related to at least one of an angle range and a geographical range.

35. The apparatus according to any one of claims 32 to 34, wherein
the information about the candidate beam for the first node comprises at least one of an index of the candidate beam for the first node, an angle corresponding to the index of the candidate beam for the first node, and a quantity of candidate beams for the first node.

36. The apparatus according to any one of claims 32 to 35, wherein
the beam information of the first node comprises at least one of an index of a beam for the first node and an angle corresponding to the index of the beam for the first node; or
the beam information of the first node comprises a beam sequence of the first node.

37. The apparatus according to any one of claims 32 to 36, wherein
the coordinating node is the third node, and the transceiver unit is specifically configured to:
send the information about the candidate beam for the first node to the coordinating node; or
the coordinating node is the second node, and the transceiver unit is specifically configured to:
send the information about the candidate beam for the first node to the coordinating node via the third node.

38. An apparatus, comprising at least one processor, wherein the processor is coupled to a memory, the memory is configured to store instructions, and when the instructions are run by the processor,
the processor is enabled to perform the method according to any one of claims 1 to 13; or
the processor is enabled to perform the method according to any one of claims 14 to 21.

39. A computer-readable storage medium, wherein the computer-readable storage medium stores computer-executable instructions, and when the computer-executable instructions are run on a computer, the computer is enabled to perform the method according to any one of claims 1 to 13, or the computer is enabled to perform the method according to any one of claims 14 to 21.

40. A computer program product, wherein the computer program product comprises computer program code, and when the computer program code is run, the method according to any one of claims 1 to 13 is implemented, or the method according to any one of claims 14 to 21 is implemented.
